(19) Europäisches Patentamt
European Patent Office
Office européen des brevets

(11) **EP 4 471 669 A1**

(12) **EUROPEAN PATENT APPLICATION**

(43) Date of publication:
**04.12.2024 Bulletin 2024/49**

(21) Application number: **24173298.1**

(22) Date of filing: **30.04.2024**

(51) International Patent Classification (IPC):
**G06N 3/08** (2023.01)   **G06N 20/00** (2019.01)
**G06Q 10/04** (2023.01)

(52) Cooperative Patent Classification (CPC):
**G06N 20/00; G06N 3/08; G06Q 10/04**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.05.2023  JP 2023089269**

(71) Applicant: **FUJITSU LIMITED**
**Kawasaki-shi, Kanagawa 211-8588 (JP)**

(72) Inventor: **Makihara, Fumiya**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **INFORMATION PROCESSING METHOD AND INFORMATION PROCESSING PROGRAM**

(57)    An information processing method characterized in that a computer executes a process includes: acquiring a plurality of records that each represents an option chosen in a past among a plurality of options; for each record of one or more records that correspond to a choosing subject that has recognized a first option among the acquired plurality of records, setting a first value that represents that a choosing subject definitely belongs to a first class in which the first option has been recognized, as an expected value of a probability that a choosing subject belongs to the first class; for each record of remaining records different from the one or more records among the acquired plurality of records, setting, as the expected value, a second value that represents that a choosing subject probabilistically belongs to the first class based on a reference value of a probability that a choosing subject belongs to the first class and a mathematical formula that represents an effect of each option of the plurality of options; and learning the reference value and a parameter included in the mathematical formula based on each record of the acquired plurality of records and the expected value set for each record of the acquired plurality of records.

FIG. 1

**Description**

FIELD

The embodiment discussed herein is related to an information processing method and an information processing program.

BACKGROUND

Heretofore, there has been a discrete choice model that estimates which option is chosen by a choosing subject from among a plurality of options. For example, a discrete choice model has a function of estimating which option is chosen by a choosing subject by using a mathematical formula representing the effect of each option. There is a technique of learning a discrete choice model based on a plurality of records representing options chosen by different choosing subjects from among a plurality of options in the past.

As related art, for example, there is a technique of classifying images with a comment of good evaluation and images other than the images with a comment of good evaluation from a set of images classified into a category matching or close to a theme desired by a user.

Japanese Laid-open Patent Publication No. 2019-114243 is disclosed as related art.

PROBLEMS

However, in related art, it is difficult to learn a discrete choice model capable of accurately estimating which option is chosen by a choosing subject from among a plurality of options. For example, a case is considered in which a first choosing subject that recognizes a certain option and a second choosing subject that does not recognize the certain option are mixed in a plurality of choosing subjects. In this case, if a first record representing an option chosen by the first choosing subject in the past and a second record representing an option chosen by the second choosing subject in the past are treated in the same way, it is difficult to appropriately learn a discrete choice model.

In one aspect, an object of the present disclosure is to make it easy to learn a discrete choice model capable of accurately estimating which option is chosen by a choosing subject from among a plurality of options.

SUMMARY

According to an aspect of the embodiments, an information processing method characterized in that a computer executes a process includes: acquiring a plurality of records that each represents an option chosen in a past among a plurality of options; for each record of one or more records that correspond to a choosing subject that has recognized a first option among the acquired plurality of records, setting a first value that represents that a choosing subject definitely belongs to a first class in which the first option has been recognized, as an expected value of a probability that a choosing subject belongs to the first class; for each record of remaining records different from the one or more records among the acquired plurality of records, setting, as the expected value, a second value that represents that a choosing subject probabilistically belongs to the first class based on a reference value of a probability that a choosing subject belongs to the first class and a mathematical formula that represents an effect of each option of the plurality of options; and learning the reference value and a parameter included in the mathematical formula based on each record of the acquired plurality of records and the expected value set for each record of the acquired plurality of records.

[Effects of Invention]

According to one aspect, it is possible to make it easy to learn a discrete choice model capable of accurately estimating which option is chosen by a choosing subject from among a plurality of options.

BRIEF DESCRIPTION OF DRAWINGS

FIG. 1 is an explanatory diagram illustrating an exemplary embodiment of an information processing method according to an embodiment;
FIG. 2 is an explanatory diagram illustrating an example of an information processing system;
FIG. 3 is a block diagram illustrating a hardware configuration example of an information processing device;
FIG. 4 is a block diagram illustrating an example of a functional configuration of the information processing device;

FIG. 5 is an explanatory diagram illustrating a flow of operation of the information processing device;

FIG. 6 is an explanatory diagram illustrating a first operation example of the information processing device (part 1);

FIG. 7 is an explanatory diagram illustrating the first operation example of the information processing device (part 2);

FIG. 8 is an explanatory diagram illustrating the first operation example of the information processing device (part 3);

FIG. 9 is an explanatory diagram illustrating the first operation example of the information processing device (part 4);

FIG. 10 is an explanatory diagram illustrating the first operation example of the information processing device (part 5);

FIG. 11 is an explanatory diagram illustrating the first operation example of the information processing device (part 6);

FIG. 12 is an explanatory diagram illustrating the first operation example of the information processing device (part 7);

FIG. 13 is an explanatory diagram illustrating the first operation example of the information processing device (part 8);

FIG. 14 is a flowchart illustrating an example of a first learning processing procedure;

FIG. 15 is a flowchart illustrating an example of a first prediction processing procedure;

FIG. 16 is an explanatory diagram illustrating a second operation example of the information processing device (part 1);

FIG. 17 is an explanatory diagram illustrating the second operation example of the information processing device (part 2);

FIG. 18 is an explanatory diagram illustrating the second operation example of the information processing device (part 3);

FIG. 19 is an explanatory diagram illustrating the second operation example of the information processing device (part 4);

FIG. 20 is an explanatory diagram illustrating the second operation example of the information processing device (part 5);

FIG. 21 is an explanatory diagram illustrating the second operation example of the information processing device (part 6); and

FIG. 22 is a flowchart illustrating an example of a second prediction processing procedure.

DESCRIPTION OF EMBODIMENTS

Hereinafter, an embodiment of an information processing method and an information processing program according to the present disclosure will be described in detail with reference to the drawings.

(Exemplary Embodiment of Information Processing Method According to Embodiment)

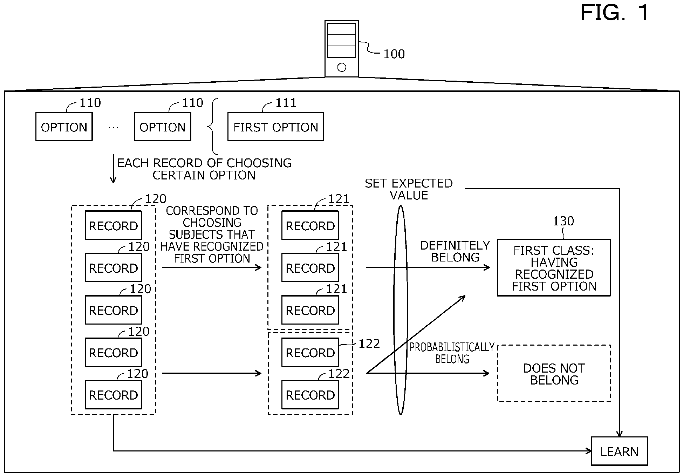

FIG. 1 is an explanatory diagram illustrating an exemplary embodiment of the information processing method according to the embodiment. An information processing device 100 is a computer for learning a discrete choice model. For example, the information processing device 100 is a server, a personal computer (PC), or the like.

A discrete choice model is a model for estimating a probability that a choosing subject chooses each option of a plurality of options. For example, a discrete choice model has a function of estimating a probability that a choosing subject chooses each option by using a mathematical formula representing the effect of each option in response to input of the feature amount related to each option. For example, a discrete choice model is a multinomial logit model, a nested logit model, a mixed logit model, or the like.

For example, a discrete choice model may be learned based on a plurality of records representing options chosen by different choosing subjects from among a plurality of options in the past. For example, a record may include the feature amount related to each option at the time when a choosing subject has chosen a certain option from among a plurality of options in the past. It is desirable to learn a discrete choice model capable of accurately estimating which option is chosen by a choosing subject from among a plurality of options.

However, there are cases in which it is difficult to learn a discrete choice model capable of accurately estimating which option is chosen by a choosing subject from among a plurality of options. For example, a case is considered in which a first choosing subject that recognizes a certain option and a second choosing subject that does not recognize the certain option are mixed in a plurality of choosing subjects. In this case, if a first record representing an option chosen by the first choosing subject in the past and a second record representing an option chosen by the second choosing subject in the past are treated in the same way, it is difficult to appropriately learn a discrete choice model.

For example, it is considered that a record representing a second option chosen in the past by the first choosing subject that recognizes a first option may be treated as a record representing that the effect of the first option is relatively smaller than the effect of the second option for the first choosing subject. On the other hand, it is considered not preferable that a record representing the second option chosen in the past by the second choosing subject that does not recognize the first option be treated as a record representing that the effect of the first option is relatively smaller than the effect of the second option for the second choosing subject.

For example, in related art, on the assumption that all choosing subjects recognize all of the options, the tendency for a choosing subject to choose a certain option in a certain feature amount appearing for each option is reflected in a discrete choice model to be learned. Accordingly, the fact that a choosing subject may not choose a certain option regardless of the feature amount related to the certain option since the choosing subject does not recognize the certain option, may not be reflected in a discrete choice model to be learned. Incorrect determination that the effect of the first option is relatively smaller than the effect of the second option for a choosing subject may be reflected in a discrete choice model based on a record representing the second option chosen in the past by the choosing subject that does not recognize the first option. For this reason, it is difficult to learn a discrete choice model capable of accurately estimating which option is chosen by a choosing subject from among a plurality of options. For example, a learned discrete choice model may be in an incorrect state in which the effect of a certain option is estimated to be smaller than the actual effect.

For example, it is considered that each of a plurality of options is an option representing movement means. For example, the plurality of options is walking, bicycle, automobile, electric kickboard, and the like. For example, a bicycle is rentable. For example, an automobile is a taxi. For example, an electric kickboard is rentable.

For a case in which a moving person serving as a choosing subject chooses movement means, it is considered that a discrete choice model is learned on the assumption that all moving persons recognize walking, bicycle, automobile, and electric kickboard as usable movement means. A certain choosing subject may not be recognizing electric kickboard as usable movement means. In this case, a discrete choice model may be learned in an incorrect state in which the effect of electric kickboard is estimated to be smaller than the actual effect.

Accordingly, in the present embodiment, description will be given for an information processing method that may make it easy to learn a discrete choice model capable of accurately estimating which option is chosen by a choosing subject from among a plurality of options.

In FIG. 1, there is a plurality of options 110. For example, the options 110 represent movement means. Each choosing subject of a plurality of choosing subjects has chosen a certain option 110 of the plurality of options 110 in the past. For example, a choosing subject is a moving person. For example, the plurality of options 110 includes a first option 111.

There is a plurality of records 120 each representing the option 110 chosen in the past among the plurality of options 110. For example, the plurality of records 120 may include two or more records 120 representing the options 110 chosen by the same choosing subject in the past. For example, the plurality of records 120 may include two or more records 120 representing the options 110 chosen by different choosing subjects in the past.

For example, the information processing device 100 has a reference value of a probability that a choosing subject belongs to a first class 130 in which the first option 111 has been recognized. For example, the information processing device 100 has a mathematical formula representing the effect of each option 110 of the plurality of options 110. For example, a mathematical formula is an element forming a model for estimating a probability that a choosing subject chooses each option of a plurality of options. For example, a mathematical formula is an element forming a model for estimating a probability that a choosing subject chooses each option in response to input of the feature amount related to each option.

(1-1) The information processing device 100 acquires the plurality of records 120. For example, the information processing device 100 acquires the plurality of records 120 by reception from another computer. For example, the information processing device 100 may acquire the plurality of records 120 by accepting input of the plurality of records 120 based on the operation input of a user.

(1-2) The information processing device 100 specifies, from the acquired plurality of records 120, one or more records 121 corresponding to choosing subjects that have recognized the first option 111. For example, the information processing device 100 specifies, from the plurality of records 120, one or more records 121 each representing an option chosen by a choosing subject that has chosen the first option 111 before. For each record 121 of the specified one or more records 121, the information processing device 100 sets, as an expected value of a probability that a choosing subject belongs to the first class 130, a first value representing that the choosing subject definitely belongs to the first class.

(1-3) The information processing device 100 specifies, from the acquired plurality of records 120, the remaining records 122 different from the one or more records 121. For each record 122 of the specified remaining records 122, the information processing device 100 sets, as an expected value, a second value representing that a choosing subject probabilistically belongs to the first class based on the reference value and mathematical formula.

Accordingly, the information processing device 100 may treat the record 121 and the record 122 in a distinguishable manner depending on whether a choosing subject has recognized the first option 111. For the record 122, the information processing device 100 may consider both a case where a choosing subject has recognized the first option 111 and a case where the choosing subject has not recognized the first option 111.

(1-4) The information processing device 100 learns the reference value and a parameter included in the mathematical formula based on each record 120 of the acquired plurality of records 120 and the expected values. Based on the set parameter of mathematical formula, the information processing device 100 learns a model for estimating a probability of choosing each option of a plurality of options. For example, the model is a discrete choice model.

Accordingly, the information processing device 100 may set the reference value and the parameter included in the mathematical formula to appropriate values in consideration of the case where a choosing subject has recognized the first option 111 and the case where the choosing subject has not recognized the first option 111. Based on the set parameter of mathematical formula, the information processing device 100 may appropriately set a mathematical formula that is an element forming a model for estimating a probability that a choosing subject chooses each option of a plurality of options. For this reason, the information processing device 100 may make it easy to learn a model for accurately estimating a probability that a choosing subject chooses each option of a plurality of options. For example, the information processing device 100 may make it easy to learn a model conforming to the actual situation, circumstance, or the like of a choosing subject that performs a choosing action.

Although the case where the information processing device 100 learns a model has been described, this is not the only case. For example, there may be a case in which another computer learns a model. In this case, the information processing device 100 transmits the set parameter of mathematical formula to the other computer.

Although the case where the information processing device 100 is realized by a single computer has been described, this is not the only case. For example, there may be a case in which the function as the information processing device 100 is realized by a plurality of computers. For example, there may be a case in which the function as the information processing device 100 is realized in the cloud.

(Example of Information Processing System 200)

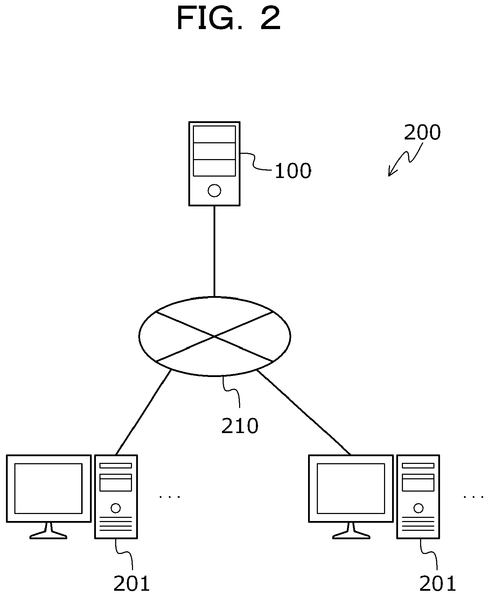

Next, with reference to FIG. 2, description will be given for an example of an information processing system 200 in which the information processing device 100 illustrated in FIG. 1 is applied.

FIG. 2 is an explanatory diagram illustrating an example of the information processing system 200. In FIG. 2, the information processing system 200 includes the information processing device 100 and a client device 201.

In the information processing system 200, the information processing device 100 and the client device 201 are coupled to each other via a wired or wireless network 210. For example, the network 210 is a local area network (LAN), a wide area network (WAN), the Internet, or the like.

The information processing device 100 is a computer for making it easy to learn a model for estimating a probability that a choosing subject chooses each option of a plurality of options. For example, the model is a discrete choice model. For example, the choosing subject is a moving person. For example, the option is movement means.

For example, a model includes a mathematical formula representing the effect of each option of a plurality of options. When the options are movement means, the effect corresponds to the cost for the movement means. The cost is a financial, temporal, or physical cost. For example, a mathematical formula has a function of calculating an index value representing the magnitude of the effect of each option of a plurality of options based on the feature amount related to each option. For example, the value of an index value is larger as the cost is smaller.

The information processing device 100 has a reference value of a probability that a choosing subject belongs to the first class in which the first option of a plurality of options has been recognized. For example, the reference value is a prior probability. The information processing device 100 has a mathematical formula representing the effect of each option of a plurality of options. The information processing device 100 includes a plurality of records each representing an option chosen by a choosing subject in the past among a plurality of options.

For each record of one or more records corresponding to choosing subjects that have recognized the first option among the plurality of records, the information processing device 100 sets, as an expected value of a probability that a choosing subject belongs to the first class, a first value representing that the choosing subject definitely belongs to the first class. For each record of the remaining records, the information processing device 100 sets, as an expected value of a probability that a choosing subject belongs to the first class, a second value representing that the choosing subject probabilistically belongs to the first class based on the reference value and mathematical formula. The information processing device 100 learns the reference value and a parameter included in the mathematical formula based on each record of the plurality of records and the expected values. Based on the set parameter of mathematical formula, the information processing device 100 learns a model for estimating a probability of choosing each option of a plurality of options.

The information processing device 100 receives a processing request including the feature amount related to each option from the client device 201. Based on the feature amount related to each option included in the processing request, the information processing device 100 estimates a probability that a choosing subject chooses each option by using the learned model. The information processing device 100 generates notification information based on the estimated probability of choosing each option. For example, notification information is information indicating a plurality of options ordered in accordance with the estimated probability of choosing each option. The information processing device 100 transmits the generated notification information to the client device 201. For example, the information processing device 100 is a server, a PC, or the like.

The client device 201 is a computer used by a choosing subject. The client device 201 acquires the feature amount related to each option based on the operation input of a choosing subject. The client device 201 generates a processing request including the feature amount related to each option and transmits the processing request to the information processing device 100. The client device 201 receives notification information from the information processing device 100. The client device 201 outputs the received notification information such that the notification information may be referred to by a choosing subject. For example, the client device 201 is a PC, a tablet terminal, a smartphone, or the like.

Although the case where the information processing device 100 is a computer different from the client device 201 has been described, this is not the only case. For example, there may be a case in which the information processing device 100 has the function as the client device 201 and operates as the client device 201 as well.

(Hardware Configuration Example of Information Processing Device 100)

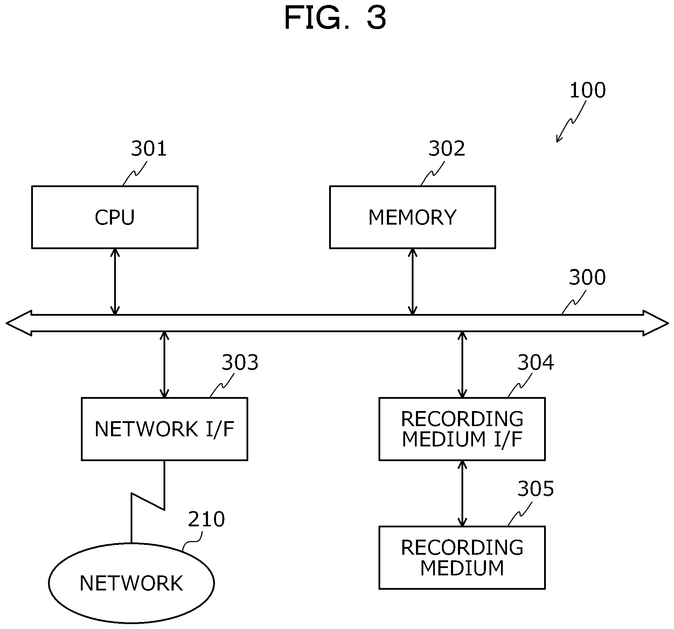

Next, with reference to FIG. 3, a hardware configuration example of the information processing device 100 will be described.

FIG. 3 is a block diagram illustrating a hardware configuration example of the information processing device 100. In FIG. 3, the information processing device 100 includes a central processing unit (CPU) 301, a memory 302, a network interface (I/F) 303, a recording medium I/F 304, and a recording medium 305. The components are coupled to each other by a bus 300.

The CPU 301 controls the entire information processing device 100. For example, the memory 302 includes a read-only memory (ROM), a random-access memory (RAM), a flash ROM, and the like. For example, the flash ROM and the ROM store various programs, and the RAM is used as a work area of the CPU 301. The CPU 301 is caused to execute the processing coded in the programs stored in the memory 302 by the CPU 301 loading the programs.

The network I/F 303 is coupled to the network 210 through a communication line, and is coupled to another computer via the network 210. The network I/F 303 serves as an interface between the network 210 and the inside of the information processing device 100, and controls input and output of data from and to another computer. For example, the network I/F 303 is a modem, a LAN adapter, or the like.

The recording medium I/F 304 controls reading and writing of data from and to the recording medium 305 in accordance with the control of the CPU 301. For example, the recording medium I/F 304 is a disk drive, a solid-state drive (SSD), a Universal Serial Bus (USB) port, or the like. The recording medium 305 is a nonvolatile memory that stores data written under the control of the recording medium I/F 304. For example, the recording medium 305 is a disk, a semiconductor memory, a USB memory, or the like. The recording medium 305 may be removably attached to the information processing device 100.

In addition to the components described above, for example, the information processing device 100 may include a keyboard, a mouse, a display, a printer, a scanner, a microphone, a speaker, and the like. The information processing device 100 may include a plurality of recording medium I/Fs 304 and a plurality of recording media 305. The information processing device 100 does not have to include the recording medium I/F 304 and the recording medium 305.

(Hardware Configuration Example of Client Device 201)

Since a hardware configuration example of the client device 201 is, for example, similar to the hardware configuration example of the information processing device 100 illustrated in FIG. 3, description thereof will be omitted.

(Example of Functional Configuration of Information Processing Device 100)

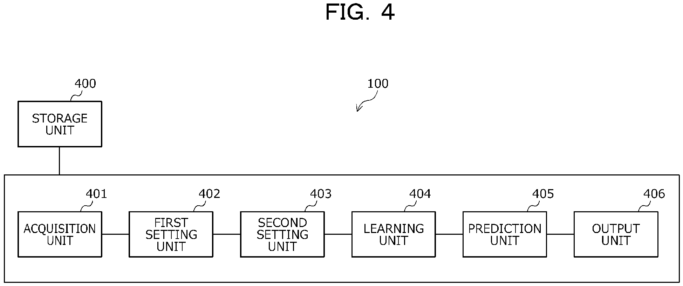

Next, with reference to FIG. 4, an example of a functional configuration of the information processing device 100 will be described.

FIG. 4 is a block diagram illustrating an example of a functional configuration of the information processing device 100. The information processing device 100 includes a storage unit 400, an acquisition unit 401, a first setting unit 402, a second setting unit 403, a learning unit 404, a prediction unit 405, and an output unit 406.

For example, the storage unit 400 is realized by a storage area such as the memory 302 or the recording medium 305 illustrated in FIG. 3. Hereinafter, a case will be described in which the storage unit 400 is included in the information processing device 100, but this is not the only case. For example, there may be a case in which the storage unit 400 is included in a device different from the information processing device 100 and the storage contents of the storage unit 400 may be referred to from the information processing device 100.

The acquisition unit 401 to the output unit 406 function as an example of a control unit. For example, the acquisition unit 401 to the output unit 406 realize their function by causing the CPU 301 to execute a program stored in a storage area such as the memory 302 or the recording medium 305 illustrated in FIG. 3, or by the network I/F 303. For example, a processing result of each functional unit is stored in a storage area such as the memory 302 or the recording medium 305 illustrated in FIG. 3.

The storage unit 400 stores various types of information to be referred to or updated in the processing of each functional unit. For example, the storage unit 400 stores a plurality of records. For example, a record is information representing an option chosen by a choosing subject in the past among a plurality of options. For example, the option represents movement means. For example, the plurality of options includes the first option.

For example, a record may include an attribute value of a choosing subject. For example, the attribute value is an identifier for identifying a choosing subject. For example, the attribute value may be age, sex, affiliation, or the like of a choosing subject. For example, the attribute value may be the location of a choosing subject, the current time, or the like. For example, a record is acquired by the acquisition unit 401. For example, a record may be set in advance by a user.

For example, the storage unit 400 stores a reference value of a probability that a choosing subject belongs to the first class. For example, the first class represents that the first option has been recognized. The first class is a class into which choosing subjects that have recognized the first option are classified. For example, the reference value is acquired by the acquisition unit 401. For example, the reference value may be set in advance by a user.

For example, the storage unit 400 stores a mathematical formula representing the effect of each option of a plurality of options. For example, a mathematical formula is an element forming a model for estimating a probability that a choosing subject chooses each option of a plurality of options. For example, the model is a discrete choice model. A mathematical formula has a function of calculating an index value indicating the effect of each option of a plurality of options. For example, a mathematical formula has a function of calculating an index value indicating the effect of each option of a plurality of options based on the feature amount related to each option. For example, a mathematical formula may have a function of calculating an index value indicating the effect of each option of a plurality of options based on the feature amount related to each option and an attribute value of a choosing subject.

For example, the storage unit 400 stores a first mathematical formula representing the effect of each option of a plurality of options in a case where a choosing subject belongs to the first class. For example, the storage unit 400 stores a second mathematical formula representing the effect of each option of the remaining options different from the first option among a plurality of options in a case where a choosing subject does not belong to the first class. For example, the mathematical formulae are acquired by the acquisition unit 401. For example, the mathematical formulae may be set in advance by a user.

For example, the storage unit 400 stores the feature amount related to each option. For example, the feature amount is acquired by the acquisition unit 401. For example, the feature amount may be set in advance by a user.

For example, the storage unit 400 stores an attribute value of a choosing subject. For example, the attribute value is acquired by the acquisition unit 401. For example, the attribute value may be set in advance by a user. For example, the attribute value may be included in a record.

For example, the storage unit 400 stores a model for estimating a probability that a choosing subject chooses each option of a plurality of options. For example, the model is generated by the learning unit 404.

The acquisition unit 401 acquires various types of information to be used in the processing of each functional unit. The acquisition unit 401 stores the acquired various types of information in the storage unit 400, or outputs the acquired various types of information to each functional unit. The acquisition unit 401 may output the various types of information stored in the storage unit 400 to each functional unit. For example, the acquisition unit 401 acquires the various types of information based on the operation input of a user. For example, the acquisition unit 401 may receive the various types of information from a device different from the information processing device 100.

For example, the acquisition unit 401 acquires a plurality of records. For example, the acquisition unit 401 acquires the plurality of records by reception from another computer. For example, the acquisition unit 401 may acquire the plurality of records by accepting input of the plurality of records based on the operation input of a user.

For example, the acquisition unit 401 acquires a reference value of a probability that a choosing subject belongs to the first class. For example, the acquisition unit 401 acquires the reference value by reception from another computer. For example, the acquisition unit 401 may acquire the reference value by accepting input of the reference value based on the operation input of a user.

For example, the acquisition unit 401 acquires a mathematical formula representing the effect of each option of a plurality of options. For example, the acquisition unit 401 acquires the mathematical formula by reception from another computer. For example, the acquisition unit 401 may acquire the mathematical formula by accepting input of the mathematical formula based on the operation input of a user.

For example, the acquisition unit 401 acquires the feature amount related to each option. For example, the acquisition unit 401 acquires the feature amount by reception from another computer. For example, the acquisition unit 401 may acquire the feature amount by accepting input of the feature amount based on the operation input of a user.

For example, the acquisition unit 401 acquires an attribute value of a choosing subject. For example, the acquisition unit 401 acquires the attribute value by reception from another computer. For example, the acquisition unit 401 may acquire the attribute value by accepting input of the attribute value based on the operation input of a user.

The acquisition unit 401 acquires a learning request for requesting learning of a model. For example, the acquisition unit 401 acquires the learning request by reception from another computer. For example, the acquisition unit 401 may acquire the learning request by accepting input of the learning request based on the operation input of a user.

The acquisition unit 401 acquires a prediction request for requesting use of a model. For example, the prediction request requests estimation of a probability that a choosing subject chooses each option. For example, the prediction request may include an attribute value of a choosing subject. The prediction request may include the feature amount related to each option. For example, the acquisition unit 401 acquires the prediction request by reception from another computer. For example, the acquisition unit 401 may acquire the prediction request by accepting input of the prediction request based on the operation input of a user.

For example, the acquisition unit 401 may acquire the attribute value of a choosing subject by extracting the attribute value of a choosing subject included in the prediction request. For example, the acquisition unit 401 may acquire the feature amount of each option by extracting the feature amount of each option included in the prediction request.

The acquisition unit 401 may accept a start trigger for starting the processing of any functional unit. For example, the start trigger is a predetermined operation input by a user. For example, the start trigger may be reception of predetermined information from another computer. For example, the start trigger may be output of predetermined information by any functional unit. For example, the acquisition unit 401 may accept the acquisition of a learning request as a start trigger for starting the processing of the first setting unit 402, the second setting unit 403, and the learning unit 404. For example, the acquisition unit 401 may accept the acquisition of a prediction request as a start trigger for starting the processing of the prediction unit 405.

The first setting unit 402 specifies, from the plurality of records acquired by the acquisition unit 401, one or more records corresponding to choosing subjects that have recognized the first option. For example, the one or more records are a collection of records representing the first option. For example, the one or more records may include a record representing another option different from the first option chosen by each choosing subject that has chosen the first option at least one or more times in the past. For example, the one or more records may include a record representing another option different from the first option chosen by another choosing subject whose attribute value is the same as or similar to that of each choosing subject that has chosen the first option at least one or more times in the past. Accordingly, the first setting unit 402 may specify one or more records preferable for being treated as records of a situation in which a choosing subject has recognized the first option.

For each record of the specified one or more records, the first setting unit 402 sets, as an expected value of a probability that a choosing subject belongs to the first class, a first value representing that the choosing subject definitely belongs to the first class. For example, when the probability has the value of 0 to 1, the first value is 1. Accordingly, based on the specified one or more records, the first setting unit 402 may enable appropriate consideration of the tendency for a choosing subject to choose a certain option in a case where the choosing subject has recognized the first option, when a parameter of mathematical formula is learned.

The second setting unit 403 specifies, from the plurality of records acquired by the acquisition unit 401, the remaining records different from the one or more records corresponding to choosing subjects that have recognized the first option. Accordingly, the second setting unit 403 may specify the remaining records preferable for being treated as records of a situation in which a possibility that a choosing subject has recognized the first option and a possibility that a choosing subject has not recognized the first option are mixed.

For each record of the specified remaining records, the second setting unit 403 sets, as an expected value of a probability that a choosing subject belongs to the first class, a second value representing that the choosing subject probabilistically belongs to the first class based on the reference value and mathematical formula. For example, when the probability is 0 to 1, the second value is equal to or larger than 0, but smaller than 1. The second value may be equal to or larger than 0 and equal to or smaller than 1. Accordingly, based on the specified remaining records, the second setting unit 403 may enable appropriate consideration of the tendency for a choosing subject to choose a certain option in a case where there is a possibility that the choosing subject has not recognized the first option, when a parameter of mathematical formula is learned.

For example, the second setting unit 403 may calculate a similarity between each record of the remaining records and a record representing the first option. For example, for each record of the remaining records, based on the reference value and mathematical formula, the second setting unit 403 sets, as an expected value, a second value representing that a choosing subject probabilistically belongs to the first class such that the expected value increases as the calculated similarity increases. Accordingly, based on the specified remaining records, the second setting unit 403 may enable appropriate consideration of the tendency for a choosing subject to choose a certain option in a case where there is a possibility that the choosing subject has not recognized the first option, when a parameter of mathematical formula is learned.

The learning unit 404 learns the reference value and a parameter included in the mathematical formula based on each record acquired by the acquisition unit 401 and the expected values. For example, the learning unit 404 learns the reference value, a parameter included in the first mathematical formula, and a parameter included in the second mathematical formula based on each record acquired by the acquisition unit 401 and the expected values. Accordingly, the learning unit 404 may accurately learn the reference value and the parameters included in the mathematical formulae in consideration of a possibility that a choosing subject has not recognized the first option.

By learning the reference value and the parameters of mathematical formulae, the learning unit 404 learns a model for estimating a probability that each option of a plurality of options is chosen by using the mathematical formula in response to input of the feature amount related to each option of the plurality of options. Accordingly, the learning unit 404 may accurately learn the model in consideration of a possibility that a choosing subject has not recognized the first option.

For example, the learning unit 404 learns a first model for a case in which a choosing subject belongs to the first class by learning the reference value and the parameter of first mathematical formula. For example, the first model estimates a probability that each option of a plurality of options is chosen by using the first mathematical formula in response to input of the feature amount related to each option of the plurality of options. Accordingly, the learning unit 404 may accurately learn the first model for a case in which a choosing subject has recognized the first option.

For example, the learning unit 404 learns a second model for a case in which a choosing subject does not belong to the first class by learning the reference value and the parameter of second mathematical formula. For example, the second model estimates a probability that each option of the remaining options is chosen by using the second mathematical formula in response to input of the feature amount related to each option of the remaining options different from the first option among the plurality of options. Accordingly, the learning unit 404 may accurately learn the second model for a case in which it is not clear whether a choosing subject has recognized the first option.

The prediction unit 405 acquires an attribute value of a choosing subject and the feature amount related to each option based on a prediction request. For example, the prediction unit 405 estimates a probability that each option is chosen by using the model learned by the learning unit 404 based on the attribute value of a choosing subject and the feature amount related to each option. Accordingly, the prediction unit 405 may accurately estimate a probability that each option is chosen.

For example, the prediction unit 405 may estimate a first probability that each option is chosen by using the first model learned by the learning unit 404 based on the attribute value of a choosing subject and the feature amount related to each option. For example, the prediction unit 405 may estimate a second probability that each option is chosen by using the second model learned by the learning unit 404 based on the attribute value of a choosing subject and the feature amount related to each option. Accordingly, the prediction unit 405 may accurately estimate a probability that each option is chosen.

The output unit 406 outputs a processing result of at least any functional unit. For example, the output form is display on a display, print output to a printer, transmission to an external device through the network I/F 303, or storage in a storage area such as the memory 302 or the recording medium 305. Accordingly, the output unit 406 is capable of notifying a user of a processing result of each functional unit, supporting management and operation of the information processing device 100, for example, update of a set value of the information processing device 100 or the like, and achieving improvement in convenience of the information processing device 100.

For example, the output unit 406 outputs the model learned by the learning unit 404. For example, the output unit 406 transmits the model to another computer. For example, the output unit 406 outputs the model such that the model may be referred to by a user. Accordingly, the output unit 406 may allow the model to be used outside.

For example, the output unit 406 outputs the probability estimated by the prediction unit 405. For example, the output unit 406 transmits the probability to another computer. For example, the output unit 406 outputs the probability such that the probability may be referred to by a user. Accordingly, the output unit 406 may allow the probability to be used outside.

(Flow of Operation of Information Processing Device 100)

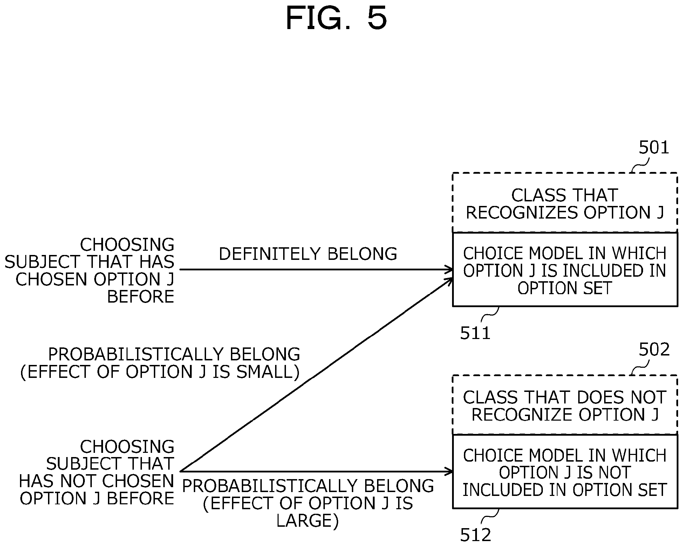

Next, with reference to FIG. 5, a flow of operation of the information processing device 100 will be described.

FIG. 5 is an explanatory diagram illustrating the flow of operation of the information processing device 100. In FIG. 5, the information processing device 100 stores option J that may not be recognized by a choosing subject among a plurality of options. For example, option J is set in advance by a user. The information processing device 100 sets an expected value of a probability that a choosing subject that has chosen option J in the past belongs to class 501 that recognizes option J, such that the choosing subject definitely belongs to class 501.

The information processing device 100 sets an expected value of a probability that a choosing subject that has not chosen option J in the past belongs to class 501 that recognizes option J, such that the choosing subject probabilistically belongs to class 501 and class 502 that does not recognize option J. For example, the information processing device 100 sets an expected value of a probability that a choosing subject that has not chosen option J in the past belongs to class 501 such that the probability that the choosing subject belongs to class 501 decreases as the effect of option J increases.

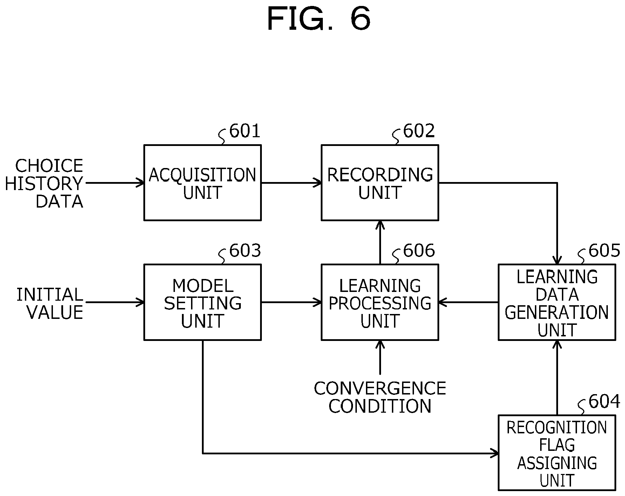

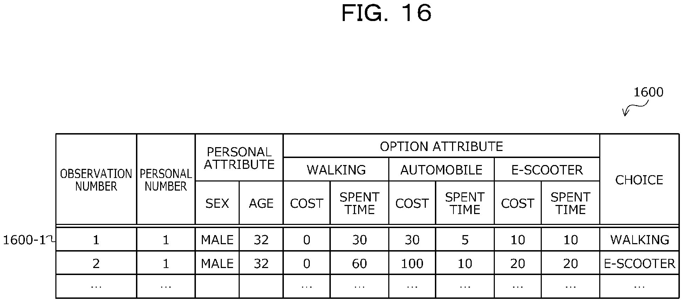

The information processing device 100 estimates the parameters of a choice model 511 and a choice model 512 based on the record representing an option chosen by each choosing subject in the past and each set expected value. For example, the choice model 511 corresponds to a case where option J is included in an option set that may be chosen. For example, the choice model 512 corresponds to a case where option J is not included in the option set that may be chosen. An example of estimating the parameters of the choice model 511 and the choice model 512 will be illustrated in a first operation example to be described later with reference to FIGs. 6 to 13 or a second operation example to be described later with reference to FIGs. 16 to 21.

(First Operation Example of Information Processing Device 100)

Next, with reference to FIGs. 6 to 13, the first operation example of the information processing device 100 will be described.

FIGs. 6 to 13 are explanatory diagrams illustrating the first operation example of the information processing device 100. FIG. 6 illustrates a specific example of a functional configuration that realizes first learning processing in which the information processing device 100 in the first operation example learns a choice model. In FIG. 6, the information processing device 100 includes an acquisition unit 601, a recording unit 602, a model setting unit 603, a recognition flag assigning unit 604, a learning data generation unit 605, and a learning processing unit 606.

The acquisition unit 601 acquires choice history data including an observation number for identifying one choosing action of a certain choosing subject, an option attribute of each option in a situation of the choosing action, and an option chosen in the choosing action. For example, the option attribute is a temporal or financial cost or the like. The choice history data may include personal information related to a choosing subject. For example, the personal information may include a personal number for identifying a choosing subject. For example, the personal information may include a personal attribute representing a characteristic of a choosing subject. For example, the personal attribute is age, sex, location, affiliation, or the like. The acquisition unit 601 transmits the choice history data to the recording unit 602.

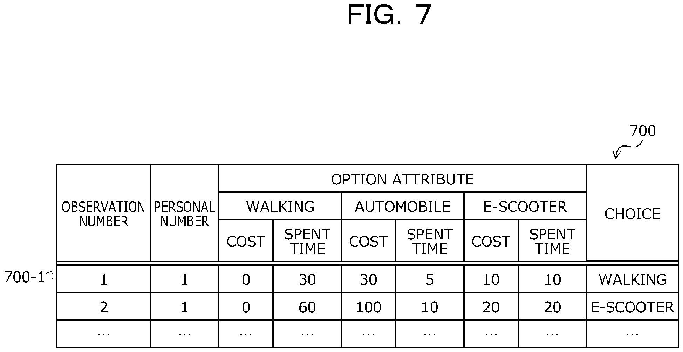

The recording unit 602 receives the choice history data from the acquisition unit 601. The recording unit 602 records the received choice history data in a choice history data management table 700 to be described later with reference to FIG. 7. Description proceeds to the description of FIG. 7, and an example of the storage contents of the choice history data management table 700 will be described. For example, the choice history data management table 700 is realized by a storage area such as the memory 302 or the recording medium 305 of the information processing device 100 illustrated in FIG. 3.

FIG. 7 illustrates an example of the storage contents of the choice history data management table 700. As illustrated in FIG. 7, the choice history data management table 700 includes the fields of observation number, personal number, option attribute, and choice. In the choice history data management table 700, choice history data is stored as record 700-a by setting information in each field for each choosing action. a is an arbitrary integer.

An observation number for identifying one choosing action of a certain choosing subject is set in the field of observation number. A personal number for identifying the above certain choosing subject that has performed the above choosing action is set in the field of personal number. An option attribute is set in the field of option attribute. For example, the option attribute is a temporal or financial cost or the like.

For example, the field of option attribute includes the fields of walking, automobile, and e-scooter. For example, the field of walking includes the fields of cost and spent time. For example, an index value representing a financial cost generated in a case where a choosing subject chooses walking as movement means is set in the field of cost. For example, spent time representing a temporal cost generated in the case where a choosing subject chooses walking as movement means is set in the field of spent time.

For example, the field of automobile includes the fields of cost and spent time. For example, an index value representing a financial cost generated in a case where a choosing subject chooses automobile as movement means is set in the field of cost. For example, spent time representing a temporal cost generated in the case where a choosing subject chooses automobile as movement means is set in the field of spent time.

For example, the field of e-scooter includes the fields of cost and spent time. For example, an index value representing a financial cost generated in a case where a choosing subject chooses e-scooter as movement means is set in the field of cost. For example, spent time representing a temporal cost generated in the case where a choosing subject chooses e-scooter as movement means is set in the field of spent time. An option chosen in the above choosing action is set in the field of choice.

Returning to the description of FIG. 6, the model setting unit 603 sets one of a plurality of options as specific option J that has or has not been recognized by a choosing subject. For example, specific option J is e-scooter. The model setting unit 603 sets an initial value of a parameter of a utility function referred to by a choice model learned by the learning processing unit 606 and a prior probability of a class probability. For example, the initial value is 0. For example, the initial value may be a random real number. For example, the class probability is a probability that a choosing subject belongs to a class representing that specific option J has been recognized. For example, the class probability has the value of 0 to 1. For example, the prior probability may be a random real number.

For example, the information processing device 100 defines personal number n for identifying a choosing subject, as indicated by the following formula (1).

$$n \in \{1,2,\dots,N\} \quad \dots(1)$$

For example, the information processing device 100 defines latent class index k for identifying a latent class into which choosing subject n is classified, as indicated by the following formula (2). When the value is 1, k indicates a latent class representing that specific option J has been recognized. When the value is 2, k indicates a latent class representing that specific option J has not been recognized.

$$k \in \{1,2\} \quad \dots(2)$$

For example, the information processing device 100 defines an option index for identifying each option in the case of k = 1, as indicated by the following formula (3).

$$j|k = 1 \in \{1,2,\dots,J\} \quad \dots(3)$$

For example, the information processing device 100 defines an option index for identifying each option in the case of k = 2, as indicated by the following formula (4).

$$j|k = 2 \in \{1,2,\dots,J\} \setminus \{J\} \quad \dots(4)$$

For example, the information processing device 100 defines the number of times of choosing t of each choosing subject n, as indicated by the following formula (5).

$$t \in \{1,2,\dots,T_n\} \quad \dots(5)$$

The information processing device 100 defines instruction variable $q_{nk}$ indicating whether choosing subject n belongs to latent class k, as indicated by the following formula (6) and the following formula (7).

$$q_{nk} = \begin{cases} 1 \text{ if user } n \text{ belongs to class } k \\ 0 \text{ ohterwise} \end{cases} \quad \dots(6)$$

$$\sum_{k\in\{1,2\}} q_{nk} = 1 \quad \dots(7)$$

The information processing device 100 defines instruction variable $y_{njt}$ indicating option j chosen by choosing subject n at the number of times of choosing t, as indicated by the following formula (8) and the following formula (9).

$$y_{njt} = \begin{cases} 1 \text{ if user } n \text{ selects item } j \text{ during time period } t \\ 0 \text{ ohterwise} \end{cases} \quad \dots(8)$$

$$\sum_{j=1}^{J} y_{njt} = 1 \quad \dots(9)$$

The information processing device 100 defines an option attribute vector as $X_{njt}$. The information processing device 100 defines a prior probability of a class probability of latent class k as $\pi_k$. The information processing device 100 defines $\pi_k$ as indicated by the following formula (10) and the following formula (11).

$$q_{nk} \sim \text{Bernoulli}(\pi_k) \quad \dots (10)$$

$$\sum_{k \in \{1,2\}} \pi_k = 1 \quad \dots (11)$$

The information processing device 100 defines probabilistic utility $U_{njt|k}$ of option j with respect to the number of times of choosing t of choosing subject n in latent class k, as indicated by the following formula (12). $\delta_{njt|k}$ is a random term. The information processing device 100 defines definite utility $V_{njt|k}$ in the following formula (12) as indicated by the following formula (13). $B_{jk}$ is a parameter of a utility function of option j in latent class k. For example, the utility function may be common to latent classes k = 1, 2.

$$U_{njt|k} = V_{njt|k} + \delta_{njt|k} \quad \dots (12)$$

$$V_{njt|k} = \beta_{jk}^T X_{njt} \quad \dots (13)$$

The information processing device 100 defines a class 1 specific choice model, which is a choice model for calculating a probability p (·) that choosing subject n in class k = 1 chooses option j at the number of times of choosing t, as indicated by the following formula (14). $q_{nk}$ in the case of latent class k = 1 is expressed as "$q_{nk|k=1}$".

$$p\left(y_{njt} \middle| q_{nk|k=1} = 1\right) = \frac{\exp\left(V_{njt|k=1}\right)}{\sum_{j'=1}^{J} \exp\left(V_{nj't|k=1}\right)} \quad j \in \{1, 2, \dots, J\} \quad \dots (14)$$

The information processing device 100 defines a class 2 specific choice model, which is a choice model for calculating a probability p (·) that choosing subject n in class k = 2 chooses option j at the number of times of choosing t, as indicated by the following formula (15). $q_{nk}$ in the case of latent class k = 2 is expressed as "$q_{nk|k=2}$".

$$p\left(y_{njt} \middle| q_{nk|k=2} = 1\right) = \begin{cases} \dfrac{\exp\left(V_{njt|k=2}\right)}{\sum_{j'=1}^{J-1} \exp\left(V_{nj't|k=2}\right)} & j \in \{1, 2, \dots, J-1\} \\ 0 & j = J \end{cases} \quad \dots (15)$$

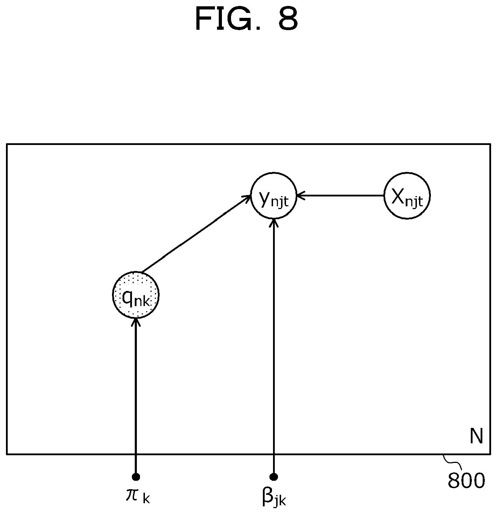

Next, description proceeds to the description of FIG. 8, and an example of a graphical model 800 corresponding to the class 1 specific choice model and the class 2 specific choice model will be described. For example, the graphical model 800 is formed by a node that calculates $q_{nk}$ determined by $\pi_k$, a node that calculates $X_{njt}$, and a node that calculates $y_{njt}$ determined by $q_{nk}$, $\beta_{jk}$, and $X_{njt}$.

Returning to the description of FIG. 6, for example, the information processing device 100 defines definite utility $V_{njt|k} = V_{walk}$ related to walking as indicated by the following formula (16). For example, $V_{walk}$ is common to latent classes k = 1, 2.

$$V_{walk} = \beta_t \cdot time_{walk} \quad \dots (16)$$

For example, the information processing device 100 defines definite utility $V_{njt|k} = V_{auto}$ related to automobile as indicated by the following formula (17). For example, $V_{auto}$ is common to latent classes k = 1, 2.

$$V_{auto} = \beta_{c(auto)} \cdot cost_{auto} + \beta_t \cdot time_{auto} + \beta_{offset(auto)} \quad \dots (17)$$

For example, the information processing device 100 defines definite utility $V_{njt|k} = V_{e\text{-}scooter}$ related to e-scooter as indicated by the following formula (18). For example, $V_{e\text{-}scooter}$ is common to latent classes k = 1, 2.

$$V_{e-scooter} = \beta_{c(e-scooter)} \cdot cost_{e-scooter} + \beta_t \cdot time_{e-scooter} + \beta_{offset(e-scooter)}$$

$$\dots (18)$$

The recognition flag assigning unit 604 refers to the choice history data management table 700, and assigns recognition flag = 1 to choice history data in which specific option J is chosen. The recognition flag assigning unit 604 refers to the choice history data management table 700, and assigns recognition flag = 0 to choice history data in which specific option J is not chosen. The recognition flag assigning unit 604 refers to the choice history data management table 700, and may assign recognition flag = 1 to choice history data including a personal number for identifying a choosing subject that has chosen specific option J before. The recognition flag assigning unit 604 transmits, to the learning data generation unit 605, choice history data to which a recognition flag is assigned.

The learning data generation unit 605 generates learning data to be used in the learning processing unit 606. The learning data generation unit 605 receives, from the recognition flag assigning unit 604, the choice history data to which a recognition flag is assigned. The learning data generation unit 605 generates learning data in which a character string representing movement means is replaced with a number corresponding to the movement means in the received choice history data.

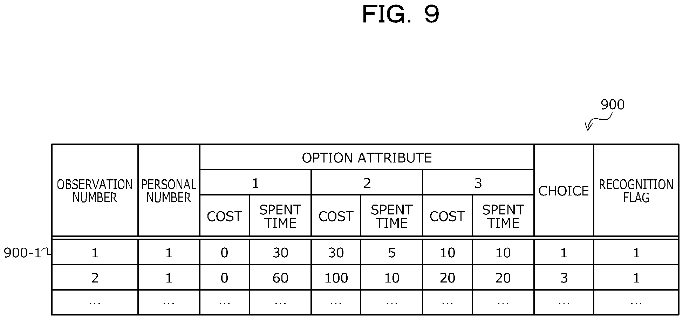

The learning data generation unit 605 records the generated learning data in a learning data management table 900 to be described later with reference to FIG. 9. Description proceeds to the description of FIG. 9, and an example of the storage contents of the learning data management table 900 will be described. For example, the learning data management table 900 is realized by a storage area such as the memory 302 or the recording medium 305 of the information processing device 100 illustrated in FIG. 3.

FIG. 9 illustrates an example of the storage contents of the learning data management table 900. As illustrated in FIG. 9, the learning data management table 900 includes the fields of observation number, personal number, option attribute, choice, and recognition flag. In the learning data management table 900, learning data is stored as record 900-b by setting information in each field for each choosing action. b is an arbitrary integer.

An observation number for identifying one choosing action of a certain choosing subject is set in the field of observation number. A personal number for identifying the above certain choosing subject that has performed the above choosing action is set in the field of personal number. An option attribute is set in the field of option attribute. For example, the option attribute is a temporal or financial cost or the like.

For example, the field of option attribute includes the fields of number 1 indicating walking, number 2 indicating automobile, and number 3 indicating e-scooter. For example, the field of 1 includes the fields of cost and spent time. For example, an index value representing a financial cost generated in a case where a choosing subject chooses walking as movement means is set in the field of cost. For example, spent time representing a temporal cost generated in the case where a choosing subject chooses walking as movement means is set in the field of spent time.

For example, the field of 2 includes the fields of cost and spent time. For example, an index value representing a financial cost generated in a case where a choosing subject chooses automobile as movement means is set in the field of cost. For example, spent time representing a temporal cost generated in the case where a choosing subject chooses automobile as movement means is set in the field of spent time.

For example, the field of 3 includes the fields of cost and spent time. For example, an index value representing a financial cost generated in a case where a choosing subject chooses e-scooter as movement means is set in the field of cost. For example, spent time representing a temporal cost generated in the case where a choosing subject chooses e-scooter as movement means is set in the field of spent time. A number indicating an option chosen in the above choosing action is set in the field of choice. A recognition flag is set in the field of recognition flag.

Returning to the description of FIG. 6, the learning processing unit 606 acquires a convergence condition. For example, the convergence condition is that a difference value of log likelihood is less than a threshold. For example, the convergence condition may be that parameter $\beta_{jk}$ of utility function is learned a predetermined number of times. The learning processing unit 606 refers to the learning data management table 900 and acquires learning data. Based on the acquired learning data, the learning processing unit 606 learns a parameter that defines the class 1 specific choice model and the class 2 specific choice model until the convergence condition is satisfied. For example, the learning processing unit 606 learns parameter $\beta_{jk}$ of utility function that defines the class 1 specific choice model and the class 2 specific choice model until the convergence condition is satisfied.

For example, the learning processing unit 606 initializes parameter $\beta_{jk}$ of utility function. For example, the initialization is setting of 0. For example, the initialization may be setting of a random real number. For example, if a certain parameter $\beta_{jk}$ is known, the learning processing unit 606 may set a constant for the certain parameter $\beta_{jk}$. For example, the learning processing unit 606 sets an expected value of a class probability corresponding to each piece of learning data. At this time, for example, the learning processing unit 606 fixes the expected value of the class probability corresponding to the learning data with recognition flag = 1 to 1.

(6-1) For example, the learning processing unit 606 sets an expected value of a class probability corresponding to each piece of learning data including a personal number for identifying a choosing subject that has not chosen specific option J before in accordance with the following formula (19). For example, the learning processing unit 606 sets an expected value of a class probability corresponding to each piece of learning data including a personal number for identifying a choosing subject that has chosen specific option J before in accordance with the following formula (20).

$$p_{nk|k=1} = \mathbb{E}\big[q_{nk|k=1}\big|y_{njt|j=J,t=1,2,\ldots,T_n} = 0\big]$$

$$= \frac{\pi_{k|k=1}\prod_{t=1}^{T_n}\sum_{j'=1}^{J-1}\exp(V_{nj't|k=1})}{\pi_{k|k=1}\prod_{t=1}^{T_n}\sum_{j'=1}^{J-1}\exp(V_{nj't|k=1}) + (1 - \pi_{k|k=1})\prod_{t=1}^{T_n}\sum_{j'=1}^{J}\exp(V_{nj't|k=1})}$$

$$\ldots(19)$$

$$p_{nk|k=1} = \mathbb{E}\left[q_{nk|k=1}\left|\sum_{t=1}^{T_n}y_{njt|j=J} > 0\right.\right] = 1 \quad\ldots(20)$$

(6-2) For example, the learning processing unit 606 calculates an expected value of log likelihood in accordance with the following formula (21). The symbol of roman numeral 2 represents an indicator function. For example, the learning processing unit 606 updates parameter $\beta_k$ of utility function based on the expected value of log likelihood in accordance with the following formula (22). For example, the learning processing unit 606 updates a class probability in accordance with the following formula (23) and the following formula (24).

$$\mathbb{E}[LL_n] = p_{nk|k=1}\left(\log \pi_{k|k=1} + \sum_{t=1}^{T_n}\sum_{j=1}^{J}y_{njt}\log\frac{\exp(V_{njt|k=1})}{\sum_{j'=1}^{J}\exp(V_{nj't|k=1})}\right)$$

$$+ (1 - p_{nk|k=1})\left\{\log(1 - \pi_{k|k=1})\right.$$

$$+ \sum_{t=1}^{T_n}\left(\sum_{j=1}^{J-1}y_{njt}\log\frac{\exp(V_{njt|k=2})}{\sum_{j'=1}^{J-1}\exp(V_{nj't|k=2})}\right.$$

$$\left.\left.+ y_{njt|j=J}\log\mathbb{1}[y_{njt|j=J} = 0]\right)\right\} \quad\ldots(21)$$

$$\beta_k \leftarrow \mathrm{argmax}_{\beta_k}\sum_{n=1}^{N}\mathbb{E}[LL_n] \quad\ldots(22)$$

$$\pi_k = \frac{N_k}{N} \quad\ldots(23)$$

$$N_k = \sum_{n=1}^{N}p_{nk} \quad\ldots(24)$$

(6-3) For example, the learning processing unit 606 repeatedly performs the processing indicated in (6-1) and (6-2) until a convergence condition is satisfied. Accordingly, the learning processing unit 606 may appropriately update parameter $\beta_k$ of utility function and the class probability. For this reason, the learning processing unit 606 may appropriately learn a choice model that refers to parameter $\beta_k$ of utility function. The learning processing unit 606 transmits parameter $\beta_k$ of utility function and the class probability to the recording unit 602.

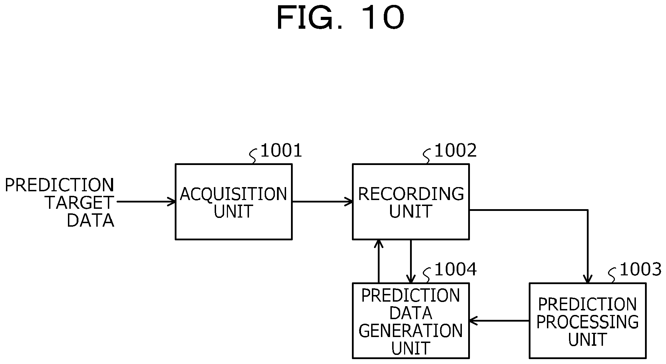

The recording unit 602 records parameter $\beta_k$ of utility function serving as a parameter of the choice model learned by the learning processing unit 606. For a certain choosing subject, the recording unit 602 records, as a posterior probability, the class probability learned by the learning processing unit 606 in association with the personal number identifying the certain choosing subject. Accordingly, the recording unit 602 may allow the choice model and posterior probability to be used. Next, description proceeds to the description of FIG. 10.

FIG. 10 illustrates a specific example of a functional configuration that realizes first prediction processing in which the information processing device 100 in the first operation example uses a choice model. In FIG. 10, the information processing device 100 includes an acquisition unit 1001, a recording unit 1002, a prediction data generation unit 1003, and a prediction processing unit 1004.

The acquisition unit 1001 acquires prediction target data including a prediction number for identifying one choosing action of a certain choosing subject and an option attribute of each option in a situation of the choosing action. For example, the choosing action may be a choosing action scheduled to be performed, and does not have to be performed yet. The prediction target data may include a personal number for identifying a choosing subject. The personal number in the prediction target data is the same as the personal number in the prediction target data. The prediction target data may include a personal attribute representing a characteristic of a choosing subject. The acquisition unit 1001 transmits the prediction target data to the recording unit 1002.

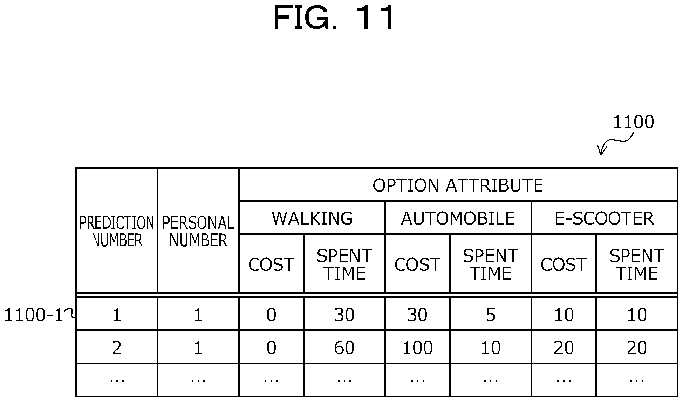

The recording unit 1002 receives the prediction target data from the acquisition unit 1001. The recording unit 1002 records the received prediction target data in a prediction target data management table 1100 to be described later with reference to FIG. 11. Description proceeds to the description of FIG. 11, and an example of the storage contents of the prediction target data management table 1100 will be described. For example, the prediction target data management table 1100 is realized by a storage area such as the memory 302 or the recording medium 305 of the information processing device 100 illustrated in FIG. 3.

FIG. 11 illustrates an example of the storage contents of the prediction target data management table 1100. As illustrated in FIG. 11, the prediction target data management table 1100 includes the fields of prediction number, personal number, and option attribute. In the prediction target data management table 1100, prediction target data is stored as record 1100-c by setting information in each field for each choosing action scheduled to be performed, c is an arbitrary integer.

A prediction number for identifying one choosing action of a certain choosing subject is set in the field of prediction number. A personal number for identifying the above certain choosing subject that has performed the above choosing action is set in the field of personal number. An option attribute is set in the field of option attribute. For example, the option attribute is a temporal or financial cost or the like.

For example, the field of option attribute includes the fields of walking, automobile, and e-scooter. For example, the field of walking includes the fields of cost and spent time. For example, an index value representing a financial cost generated in a case where a choosing subject chooses walking as movement means is set in the field of cost. For example, spent time representing a temporal cost generated in the case where a choosing subject chooses walking as movement means is set in the field of spent time.

For example, the field of automobile includes the fields of cost and spent time. For example, an index value representing a financial cost generated in a case where a choosing subject chooses automobile as movement means is set in the field of cost. For example, spent time representing a temporal cost generated in the case where a choosing subject chooses automobile as movement means is set in the field of spent time.

For example, the field of e-scooter includes the fields of cost and spent time. For example, an index value representing a financial cost generated in a case where a choosing subject chooses e-scooter as movement means is set in the field of cost. For example, spent time representing a temporal cost generated in the case where a choosing subject chooses e-scooter as movement means is set in the field of spent time.

Returning to the description of FIG. 10, the prediction data generation unit 1003 refers to the prediction target data management table 1100, and generates prediction data to be referred to by the prediction processing unit 1004 based on prediction target data. The prediction data generation unit 1003 generates prediction data in which a character string representing movement means is replaced with a number corresponding to the movement means in the received choice history data.

The prediction data generation unit 1003 assigns a class probability to the prediction data. In a case where a personal number is included in the prediction data, the prediction data generation unit 1003 uses the recording unit 1002 and assigns, as the class probability, a posterior probability corresponding to the personal number to the prediction data. In a case where it is determined that there is no posterior probability corresponding to the personal number by using the recording unit 1002, the prediction data generation unit 1003 assigns, as the class probability, a prior probability to the prediction data. There may be a case in which the prediction data generation unit 1003 normalizes the value of prediction data.

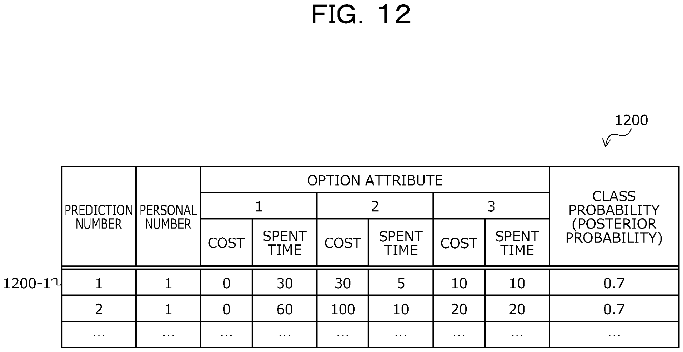

The prediction data generation unit 1003 records the generated prediction data in a prediction data management table 1200 to be described later with reference to FIG. 12. Description proceeds to the description of FIG. 12, and an example of the storage contents of the prediction data management table 1200 will be described. For example, the prediction data management table 1200 is realized by a storage area such as the memory 302 or the recording medium 305 of the information processing device 100 illustrated in FIG. 3.

FIG. 12 illustrates an example of the storage contents of the prediction data management table 1200. As illustrated in FIG. 12, the prediction data management table 1200 includes the fields of prediction number, personal number, option attribute, and class probability. In the prediction data management table 1200, prediction data is stored as record 1200-d by setting information in each field for each choosing action. d is an arbitrary integer.

A prediction number for identifying one choosing action of a certain choosing subject is set in the field of prediction number. A personal number for identifying the above certain choosing subject that has performed the above choosing action is set in the field of personal number. An option attribute is set in the field of option attribute. For example, the option attribute is a temporal or financial cost or the like.

For example, the field of option attribute includes the fields of number 1 indicating walking, number 2 indicating automobile, and number 3 indicating e-scooter. For example, the field of 1 includes the fields of cost and spent time. For example, an index value representing a financial cost generated in a case where a choosing subject chooses walking as movement means is set in the field of cost. For example, spent time representing a temporal cost generated in the case where a choosing subject chooses walking as movement means is set in the field of spent time.

For example, the field of 2 includes the fields of cost and spent time. For example, an index value representing a financial cost generated in a case where a choosing subject chooses automobile as movement means is set in the field of cost. For example, spent time representing a temporal cost generated in the case where a choosing subject chooses automobile as movement means is set in the field of spent time.

For example, the field of 3 includes the fields of cost and spent time. For example, an index value representing a financial cost generated in a case where a choosing subject chooses e-scooter as movement means is set in the field of cost. For example, spent time representing a temporal cost generated in the case where a choosing subject chooses e-scooter as movement means is set in the field of spent time. A class probability is set in the field of class probability.

Returning to the description of FIG. 10, the prediction processing unit 1004 acquires a parameter of a choice model from the recording unit 1002. The prediction processing unit 1004 refers to the prediction data management table 1200, and calculates a choosing probability that each option is chosen for each piece of prediction data.

For example, for prediction data, using the class 1 specific choice model, the prediction processing unit 1004 calculates a first choosing probability that each option is chosen. For example, for prediction data, using the class 2 specific choice model, the prediction processing unit 1004 calculates a second choosing probability that each option is chosen. For example, for each option, the prediction processing unit 1004 calculates, as a choosing probability, a sum of a value obtained by multiplying the calculated first choosing probability by a class probability as a weight and a value obtained by multiplying the calculated second choosing probability by (1 - class probability) as a weight. Accordingly, the prediction processing unit 1004 may accurately calculate a choosing probability that each option is chosen.

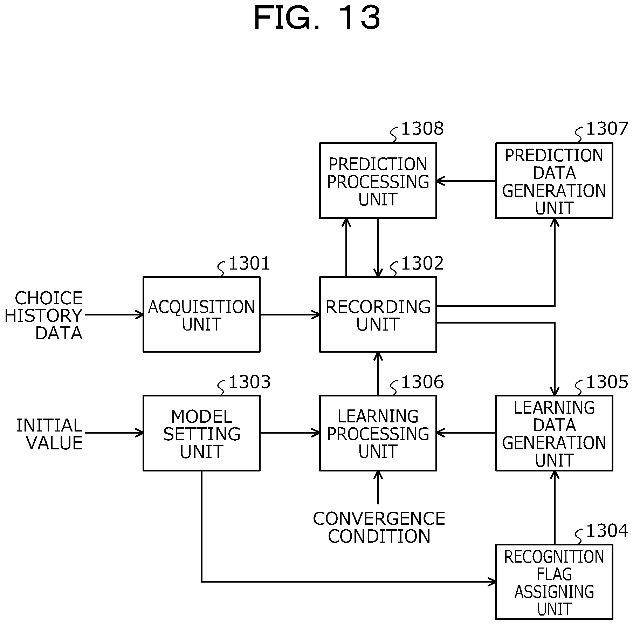

For example, the prediction processing unit 1004 transmits the calculated choosing probability to the recording unit 1002. The recording unit 1002 records the received choosing probability that each option is chosen, in association with the prediction data. Accordingly, the recording unit 1002 may allow the choosing probability that each option is chosen to be used. Next, description proceeds to the description of FIG. 13.

FIG. 13 illustrates a specific example of a functional configuration that realizes the first learning processing in which the information processing device 100 in the first operation example learns a choice model, and realizes the first prediction processing in which a choice model is used. In FIG. 13, the information processing device 100 includes an acquisition unit 1301, a recording unit 1302, a model setting unit 1303, a recognition flag assigning unit 1304, a learning data generation unit 1305, a learning processing unit 1306, a prediction data generation unit 1307, and a prediction processing unit 1308.

The acquisition unit 1301 corresponds to the acquisition unit 601 and the acquisition unit 1001. The recording unit 1302 corresponds to the recording unit 602 and the recording unit 1002. The model setting unit 1303 corresponds to the model setting unit 603. The recognition flag assigning unit 1304 corresponds to the recognition flag assigning unit 604. The learning data generation unit 1305 corresponds to the learning data generation unit 605. The learning processing unit 1306 corresponds to the learning processing unit 606. The prediction data generation unit 1307 corresponds to the prediction data generation unit 1003. The prediction processing unit 1308 corresponds to the prediction processing unit 1004.

As described above, the information processing device 100 may learn a choice model capable of accurately estimating a choosing probability that each option is chosen, in consideration of the recognition of specific option J by a choosing subject. The information processing device 100 may allow a simulation using a choice model to be performed. For example, the simulation is related to flow of people, purchase, or the like.

(Application Example of Information Processing Device 100)

For example, the information processing device 100 may be applied to the field of traffic simulation. For example, the information processing device 100 may perform a simulation of simulating which movement means is chosen by a moving person serving as a choosing subject. For example, the information processing device 100 may analyze, by the simulation, how movement means chosen by a moving person changes due to a change in an environment such as a traffic jam condition, a road charge, and the cost of movement means. Accordingly, for example, the information processing device 100 may obtain information contributing to consideration of a city policy. For example, the information processing device 100 may be applied to the field of economy. For example, the information processing device 100 may perform a simulation of simulating which product is chosen by a customer serving as a choosing subject.

(First Learning Processing Procedure)

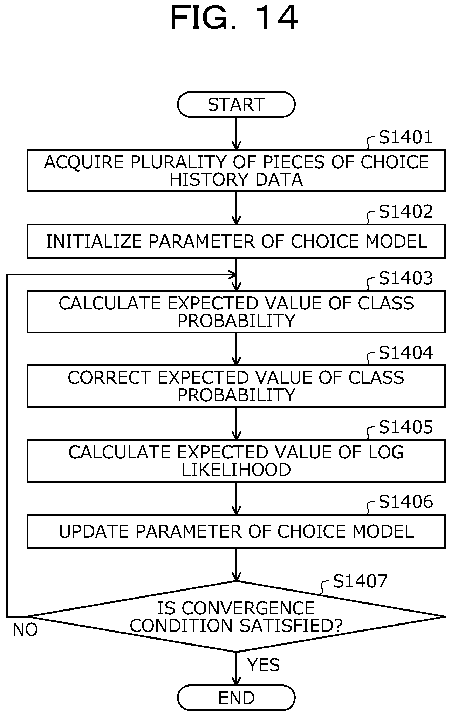

Next, with reference to FIG. 14, an example of a first learning processing procedure executed by the information processing device 100 in the first operation example will be described. For example, the first learning processing is realized by the CPU 301, a storage area such as the memory 302 or the recording medium 305, and the network I/F 303 illustrated in FIG. 3.

FIG. 14 is a flowchart illustrating an example of the first learning processing procedure. In FIG. 14, the information processing device 100 acquires a plurality of pieces of choice history data (step S1401). The information processing device 100 initializes a parameter of a choice model (step S1402).

The information processing device 100 calculates an expected value of a class probability corresponding to each piece of choice history data of the acquired plurality of pieces of choice history data (step S1403). The information processing device 100 corrects the expected value of the class probability corresponding to one or more pieces of choice history data in which the recognition flag represents recognition among the acquired plurality of pieces of choice history data (step S1404).

The information processing device 100 calculates an expected value of log likelihood (step S1405). The information processing device 100 updates the parameter of the choice model (step S1406). The information processing device 100 determines whether a convergence condition is satisfied (step S1407). When the convergence condition is not satisfied (step S1407: No), the information processing device 100 returns to the processing of step S1403. On the other hand, when the convergence condition is satisfied (step S1407: Yes), the information processing device 100 ends the first learning processing.

(First Prediction Processing Procedure)

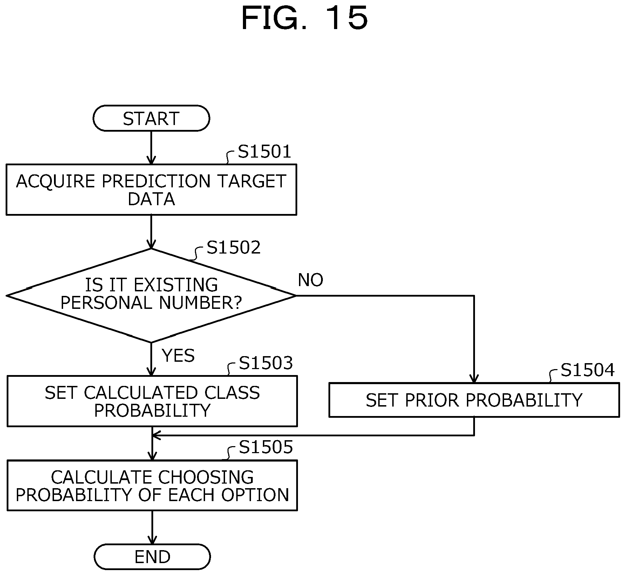

Next, with reference to FIG. 15, an example of a first prediction processing procedure executed by the information processing device 100 in the first operation example will be described. For example, the first prediction processing is realized by the CPU 301, a storage area such as the memory 302 or the recording medium 305, and the network I/F 303 illustrated in FIG. 3.

FIG. 15 is a flowchart illustrating an example of the first prediction processing procedure. In FIG. 15, the information processing device 100 acquires prediction target data (step S1501).

The information processing device 100 determines whether the personal number included in the acquired prediction target data is an existing personal number for which a class probability has been calculated (step S1502). When the personal number is an existing personal number (step S1502: Yes), the information processing device 100 proceeds to the processing of step S1503. On the other hand, when the personal number is not an existing personal number (step S1502: No), the information processing device 100 proceeds to the processing of step S1504.

In step S1503, the information processing device 100 sets the calculated class probability as the class probability corresponding to the target (step S1503). The information processing device 100 proceeds to the processing of step S1505.

In step S1504, the information processing device 100 sets a prior probability as the class probability corresponding to the target (step S1504). The information processing device 100 proceeds to the processing of step S1505.

In step S1505, the information processing device 100 calculates a choosing probability of each option based on the set class probability (step S1505). The information processing device 100 ends the first prediction processing.

(Second Operation Example of Information Processing Device 100)

Next, with reference to FIGs. 16 to 21, the second operation example of the information processing device 100 will be described. For example, unlike the first operation example, the second operation example corresponds to a case where the information processing device 100 uses a personal attribute.

FIGs. 16 to 21 are explanatory diagrams illustrating the second operation example of the information processing device 100. A specific example of a functional configuration that realizes second learning processing in which the information processing device 100 in the second operation example learns a choice model is similar to the specific example of functional configuration illustrated in FIG. 6. The information processing device 100 includes the acquisition unit 601, the recording unit 602, the model setting unit 603, the recognition flag assigning unit 604, the learning data generation unit 605, and the learning processing unit 606.

The acquisition unit 601 acquires choice history data including an observation number for identifying one choosing action of a certain choosing subject, an option attribute of each option in a situation of the choosing action, and an option chosen in the choosing action. For example, the option attribute is a temporal or financial cost or the like. The choice history data includes personal information on a choosing subject. For example, the personal information includes a personal number for identifying a choosing subject. For example, the personal information includes a personal attribute representing a characteristic of a choosing subject. For example, the personal attribute is age and sex. The acquisition unit 601 transmits the choice history data to the recording unit 602.

The recording unit 602 receives the choice history data from the acquisition unit 601. The recording unit 602 records the received choice history data in a choice history data management table 1600 to be described later with reference to FIG. 16. Description proceeds to the description of FIG. 16, and an example of the storage contents of the choice history data management table 1600 will be described. For example, the choice history data management table 1600 is realized by a storage area such as the memory 302 or the recording medium 305 of the information processing device 100 illustrated in FIG. 3.

FIG. 16 illustrates an example of the storage contents of the choice history data management table 1600. As illustrated in FIG. 16, the choice history data management table 1600 includes the fields of observation number, personal number, personal attribute, option attribute, and choice. In the choice history data management table 1600, choice history data is stored as record 1600-e by setting information in each field for each choosing action. e is an arbitrary integer.

An observation number for identifying one choosing action of a certain choosing subject is set in the field of observation number. A personal number for identifying the above certain choosing subject that has performed the above choosing action is set in the field of personal number. For example, the field of personal attribute includes the fields of sex and age. Sex of the above certain choosing subject that has performed the above choosing action is set in the field of sex. The age of the above certain choosing subject that has performed the above choosing action is set in the field of age.

An option attribute is set in the field of option attribute. For example, the option attribute is a temporal or financial cost or the like. For example, the field of option attribute includes the fields of walking, automobile, and e-scooter. For example, the field of walking includes the fields of cost and spent time. For example, an index value representing a financial cost generated in a case where a choosing subject chooses walking as movement means is set in the field of cost. For example, spent time representing a temporal cost generated in the case where a choosing subject chooses walking as movement means is set in the field of spent time.

For example, the field of automobile includes the fields of cost and spent time. For example, an index value representing a financial cost generated in a case where a choosing subject chooses automobile as movement means is set in the field of cost. For example, spent time representing a temporal cost generated in the case where a choosing subject chooses automobile as movement means is set in the field of spent time.

For example, the field of e-scooter includes the fields of cost and spent time. For example, an index value representing a financial cost generated in a case where a choosing subject chooses e-scooter as movement means is set in the field of cost. For example, spent time representing a temporal cost generated in the case where a choosing subject chooses e-scooter as movement means is set in the field of spent time. An option chosen in the above choosing action is set in the field of choice.

The model setting unit 603 sets one of a plurality of options as specific option J that has or has not been recognized by a choosing subject. For example, specific option J is e-scooter. The model setting unit 603 sets an initial value of a parameter of a utility function referred to by a choice model learned by the learning processing unit 606, a prior probability of a class probability, and a parameter defining a distribution of personal attributes for each class. For example, the initial value is 0. For example, the initial value may be a random real number. For example, the class probability is a probability that a choosing subject belongs to a class representing that specific option J has been recognized. For example, the class probability has the value of 0 to 1. For example, the prior probability may be a random real number.

For example, the information processing device 100 defines personal number n for identifying a choosing subject, as indicated by the following formula (25).

$$n \in \{1,2,\ldots,N\} \quad \ldots(25)$$

For example, the information processing device 100 defines latent class index k for identifying a latent class into which choosing subject n is classified, as indicated by the following formula (26). When the value is 1, k indicates a latent class representing that specific option J has been recognized. When the value is 2, k indicates a latent class representing that specific option J has not been recognized.

$$k \in \{1,2\} \quad \ldots(26)$$

For example, the information processing device 100 defines an option index for identifying each option in the case of k = 1, as indicated by the following formula (27).

$$j|k = 1 \in \{1,2,\ldots,J\} \quad \ldots(27)$$

For example, the information processing device 100 defines an option index for identifying each option in the case of k = 2, as indicated by the following formula (28).

$$j|k = 2 \in \{1,2,\ldots,J\} \setminus \{J\} \quad \ldots(28)$$

For example, the information processing device 100 defines the number of times of choosing t of each choosing subject n, as indicated by the following formula (29).

$$t \in \{1,2,\ldots,T_n\} \quad \ldots(29)$$

The information processing device 100 defines instruction variable $q_{nk}$ indicating whether choosing subject n belongs to latent class k, as indicated by the following formula (30) and the following formula (31).

$$q_{nk} = \begin{cases} 1 \text{ if user } n \text{ belongs to class } k \\ 0 \text{ ohterwise} \end{cases} \quad \ldots(30)$$

$$\sum_{k\in\{1,2\}} q_{nk} = 1 \quad \ldots(31)$$

The information processing device 100 defines instruction variable $y_{njt}$ indicating option j chosen by choosing subject n at the number of times of choosing t, as indicated by the following formula (32) and the following formula (33).

$$y_{njt} = \begin{cases} 1 \text{ if user } n \text{ selects item } j \text{ during time period } t \\ 0 \text{ ohterwise} \end{cases} \quad \ldots(32)$$

$$\sum_{j=1}^{J} y_{njt} = 1 \quad \ldots(33)$$

The information processing device 100 defines an option attribute vector as $X_{njt}$. The information processing device 100 defines a personal attribute vector of a continuous value as $S_{cn}$. The information processing device 100 defines a personal attribute vector of a discrete value as $S_{dn}$. The information processing device 100 defines a prior probability of a class probability of latent class k as $\pi_k$. The information processing device 100 defines $\pi_k$ as indicated by the following formula (34) and the following formula (35).

$$q_{nk} \sim \text{Bernoulli}(\pi_k) \quad \dots (34)$$

$$\sum_k \pi_k = 1 \quad \dots (35)$$

The information processing device 100 defines a distribution of personal attribute vectors $S_{cn}$ of continuous values as indicated by the following formula (36).

$$p(S_{cn}|q_{nk} = 1, \mu_{ck}, \Sigma_{ck}) = \mathcal{N}(S_{cn}|\mu_{ck}, \Sigma_{ck})$$

$$= \frac{1}{\sqrt{(2\pi)^{D_c}|\Sigma_{ck}|}} \exp\left(-\frac{1}{2}(S_{cn} - \mu_{ck})^T \Sigma_{ck}^{-1}(S_{cn} - \mu_{ck})\right) \quad \dots (36)$$

The information processing device 100 defines a distribution of personal attribute vectors $S_{dn}$ of discrete values as indicated by the following formula (37).

$$p(S_{dn}|q_{nk} = 1, \mu_{dk}) = \prod_{i=1}^{D_d} \mu_{dk_i}^{S_{dni}} (1 - \mu_{dk_i})^{(1-S_{dni})} \quad \dots (37)$$

The information processing device 100 defines probabilistic utility $U_{njt|k}$ of option j with respect to the number of times of choosing t of choosing subject n in latent class k, as indicated by the following formula (38). The information processing device 100 defines definite utility $V_{njt|k}$ in the following formula (38) as indicated by the following formula (39). $B_{jk}$ is a parameter of a utility function of option j in latent class k. For example, the utility function may be common to latent classes k = 1, 2.

$$U_{njt|k} = V_{njt|k} + \delta_{njt|k} \quad \dots (38)$$

$$V_{njt|k} = \beta_k^T X_{njt} \quad \dots (39)$$

The information processing device 100 defines the class 1 specific choice model, which is a choice model for calculating a probability p (·) that choosing subject n in class k = 1 chooses option j at the number of times of choosing t, as indicated by the following formula (40). $q_{nk}$ in the case of latent class k = 1 is expressed as "$q_{nk|k=1}$".

$$p(y_{njt}|q_{nk|k=1} = 1) = \frac{\exp(V_{njt|k=1})}{\sum_{j'=1}^{J} \exp(V_{nj't|k=1})} \quad j \in \{1, 2, \dots, J\} \quad \dots (40)$$

The information processing device 100 defines the class 2 specific choice model, which is a choice model for calculating a probability p (·) that choosing subject n in class k = 2 chooses option j at the number of times of choosing t, as indicated by the following formula (41). $q_{nk}$ in the case of latent class k = 2 is expressed as "$q_{nk|k=2}$".

$$p(y_{njt}|q_{nk|k=2} = 1) = \begin{cases} \dfrac{\exp(V_{njt|k=2})}{\sum_{j'=1}^{J-1} \exp(V_{nj't|k=2})} & j \in \{1, 2, \dots, J-1\} \\ 0 & j = J \end{cases} \quad \dots (41)$$

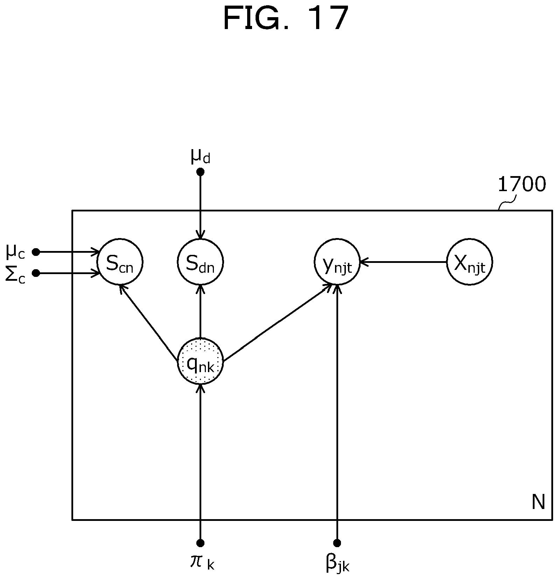

Next, description proceeds to the description of FIG. 17, and an example of a graphical model 1700 corresponding to the class 1 specific choice model and the class 2 specific choice model will be described. For example, the graphical model 1700 is formed by a plurality of nodes. For example, the plurality of nodes includes a node that calculates

$q_{nk}$ determined by $\pi_k$, a node that calculates $X_{njt}$, and a node that calculates $y_{njt}$ determined by $q_{nk}$, $\beta_{jk}$, and $X_{njt}$. For example, the plurality of nodes includes a node that calculates $S_{cn}$ determined by $q_{nk}$, $\mu_c$, and $\Sigma_c$, and a node that calculates $S_{dn}$ determined by $q_{nk}$ and $\mu_d$.

For example, the information processing device 100 defines definite utility $V_{njt|k} = V_{walk}$ related to walking as indicated by the above formula (16). For example, $V_{walk}$ is common to latent classes k = 1, 2. For example, the information processing device 100 defines definite utility $V_{njt|k} = V_{auto}$ related to automobile as indicated by the above formula (17). For example, $V_{auto}$ is common to latent classes k = 1, 2. For example, the information processing device 100 defines definite utility $V_{njt|k} = V_{e\text{-}scooter}$ related to e-scooter as indicated by the above formula (18). For example, $V_{e\text{-}scooter}$ is common to latent classes k = 1, 2.

The recognition flag assigning unit 604 refers to the choice history data management table 1600, and assigns recognition flag = 1 to choice history data in which specific option J is chosen. The recognition flag assigning unit 604 refers to the choice history data management table 1600, and assigns recognition flag = 0 to choice history data in which specific option J is not chosen. The recognition flag assigning unit 604 refers to the choice history data management table 1600, and may assign recognition flag = 1 to choice history data including a personal number for identifying a choosing subject that has chosen specific option J before. The recognition flag assigning unit 604 transmits, to the learning data generation unit 605, choice history data to which a recognition flag is assigned.

The learning data generation unit 605 generates learning data to be used in the learning processing unit 606. The learning data generation unit 605 receives, from the recognition flag assigning unit 604, the choice history data to which a recognition flag is assigned. The learning data generation unit 605 generates learning data in which a character string representing movement means is replaced with a number corresponding to the movement means and a character string representing sex of a personal attribute is replaced with a number corresponding to the sex in the received choice history data.

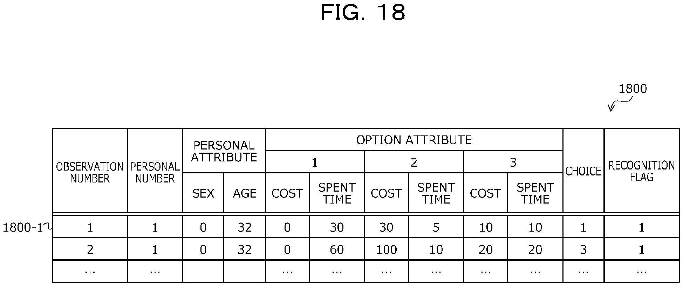

The learning data generation unit 605 records the generated learning data in a learning data management table 1800 to be described later with reference to FIG. 18. Description proceeds to the description of FIG. 18, and an example of the storage contents of the learning data management table 1800 will be described. For example, the learning data management table 1800 is realized by a storage area such as the memory 302 or the recording medium 305 of the information processing device 100 illustrated in FIG. 3.

FIG. 18 illustrates an example of the storage contents of the learning data management table 1800. As illustrated in FIG. 18, the learning data management table 1800 includes the fields of observation number, personal number, personal attribute, option attribute, choice, and recognition flag. In the learning data management table 1800, learning data is stored as record 1800-f by setting information in each field for each choosing action. f is an arbitrary integer.

An observation number for identifying one choosing action of a certain choosing subject is set in the field of observation number. A personal number for identifying the above certain choosing subject that has performed the above choosing action is set in the field of personal number. For example, the field of personal attribute includes the fields of sex and age. A number indicating sex of the above certain choosing subject that has performed the above choosing action is set in the field of sex. The age of the above certain choosing subject that has performed the above choosing action is set in the field of age.

An option attribute is set in the field of option attribute. For example, the option attribute is a temporal or financial cost or the like. For example, the field of option attribute includes the fields of number 1 indicating walking, number 2 indicating automobile, and number 3 indicating e-scooter.

For example, the field of 1 includes the fields of cost and spent time. For example, an index value representing a financial cost generated in a case where a choosing subject chooses walking as movement means is set in the field of cost. For example, spent time representing a temporal cost generated in the case where a choosing subject chooses walking as movement means is set in the field of spent time.

For example, the field of 2 includes the fields of cost and spent time. For example, an index value representing a financial cost generated in a case where a choosing subject chooses automobile as movement means is set in the field of cost. For example, spent time representing a temporal cost generated in the case where a choosing subject chooses automobile as movement means is set in the field of spent time.

For example, the field of 3 includes the fields of cost and spent time. For example, an index value representing a financial cost generated in a case where a choosing subject chooses e-scooter as movement means is set in the field of cost. For example, spent time representing a temporal cost generated in the case where a choosing subject chooses e-scooter as movement means is set in the field of spent time. A number indicating an option chosen in the above choosing action is set in the field of choice. A recognition flag is set in the field of recognition flag.

The learning processing unit 606 acquires a convergence condition. For example, the convergence condition is that a difference value of log likelihood is less than a threshold. For example, the convergence condition may be that parameter $\beta_{jk}$ of utility function is learned a predetermined number of times. The learning processing unit 606 refers to the learning data management table 1800 and acquires learning data. Based on the acquired learning data, the learning processing unit 606 learns a parameter that defines the class 1 specific choice model and the class 2 specific choice model until the convergence condition is satisfied. For example, the learning processing unit 606 learns parameter $\beta_{ik}$ of utility function that defines the class 1 specific choice model and the class 2 specific choice model until the convergence condition is satisfied.

For example, the learning processing unit 606 initializes parameter $\beta_{jk}$ of utility function. For example, the initialization is setting of 0. For example, the initialization may be setting of a random real number. For example, if a certain parameter $\beta_{jk}$ is known, the learning processing unit 606 may set a constant for the certain parameter $\beta_{jk}$. For example, the learning processing unit 606 sets an expected value of a class probability corresponding to each piece of learning data. At this time, for example, the learning processing unit 606 fixes the expected value of the class probability corresponding to the learning data with recognition flag = 1 to 1.

(18-1) For example, the learning processing unit 606 sets an expected value of a class probability corresponding to each piece of learning data including a personal number for identifying a choosing subject that has not chosen specific option J before in accordance with the following formula (42) and the following formula (43). For example, the learning processing unit 606 sets an expected value of a class probability corresponding to each piece of learning data including a personal number for identifying a choosing subject that has chosen specific option J before in accordance with the following formula (44).

$$p_{nk|k=1} = \frac{\pi_{k|k=1}\alpha_{k|k=1}\prod_{t=1}^{T_n}\left(1 - \frac{\exp\left(V_{njt|k=1,j=J}\right)}{\sum_{j'=1}^{J}\exp\left(V_{nj't|k=1}\right)}\right)}{\pi_{k|k=1}\alpha_{k|k=1}\prod_{t=1}^{T_n}\left(1 - \frac{\exp\left(V_{njt|k=1,j=J}\right)}{\sum_{j'=1}^{J}\exp\left(V_{nj't|k=1}\right)}\right) + \left(1 - \pi_{k|k=1}\right)\alpha_{k|k=2}}$$

$$\ldots (42)$$

$$\alpha_k = \mathcal{N}(S_{cn}|\mu_{ck}, \Sigma_{ck}) = \prod_{i=1}^{D_d}\mu_{dk_i}^{S_{dni}}\left(1 - \mu_{dk_i}\right)^{(1-S_{dni})} \quad \ldots (43)$$

$$p_{nk|k=1} = \mathbb{E}\left[q_{nk|k=1}\middle|\sum_{t=1}^{T_n}y_{njt|j=J} > 0\right] = 1 \quad \ldots (44)$$

(18-2) For example, the learning processing unit 606 calculates an expected value of log likelihood in accordance with the following formula (45). For example, the learning processing unit 606 updates parameter $\beta_k$ of utility function based on the expected value of log likelihood in accordance with the following formula (46) to the following formula (50). For example, the learning processing unit 606 updates a class probability in accordance with the following formula (51).

$$\mathbb{E}[LL_n] = p_{nk|k=1}\Bigg\{\log \pi_{k|k=1} + \log \mathcal{N}\left(S_{cn}|\mu_{ck|k=1}, \Sigma_{ck|k=1}\right)$$

$$+ \sum_{i=1}^{D_d}\left(S_{dni}\log \mu_{dk_i|k=1} + (1 - S_{dni})\log\left(1 - \mu_{dk_i|k=1}\right)\right)$$

$$+ \sum_{t=1}^{T_n}\sum_{j=1}^{J} y_{njt}\log\frac{\exp\left(V_{njt|k=1}\right)}{\sum_{j'=1}^{J}\exp\left(V_{nj't|k=1}\right)}\Bigg\}$$

$$+ \left(1 - p_{nk|k=1}\right)\Bigg\{\log\left(1 - \pi_{k|k=1}\right) + \log \mathcal{N}\left(S_{cn}|\mu_{ck|k=2}, \Sigma_{ck|k=2}\right)$$

$$+ \sum_{i=1}^{D_d}\left(S_{dni}\log \mu_{dk_i|k=2} + (1 - S_{dni})\log\left(1 - \mu_{dk_i|k=2}\right)\right)$$

$$+ \sum_{t=1}^{T_n}\Bigg(\sum_{j=1}^{J-1} y_{njt}\log\frac{\exp\left(V_{njt|k=2}\right)}{\sum_{j'=1}^{J-1}\exp\left(V_{nj't|k=2}\right)}$$

$$+ y_{njt|j=J}\log \mathbb{1}\left[y_{njt|j=J} = 0\right]\Bigg)\Bigg\}\Bigg\} \quad \dots(45)$$

$$\beta_k \leftarrow \operatorname{argmax}_{\beta_k}\sum_{n=1}^{N}\mathbb{E}[LL_n] \quad \dots(46)$$

$$\mu_{ck} = \frac{1}{N_k}\sum_{n=1}^{N} p_{nk}\, S_{cn} \quad \dots(47)$$

$$\Sigma_{ck} = \frac{1}{N_k}\sum_{n=1}^{N} p_{nk}\, (S_{cn} - \mu_{ck})\,(S_{cn} - \mu_{ck})^T \quad \dots(48)$$

$$\mu_{dk} = \frac{1}{N_k}\sum_{n=1}^{N} p_{nk}\, S_{dn} \quad \dots(49)$$

$$N_k = \sum_{n=1}^{N} p_{nk} \quad \dots(50)$$

$$\pi_k = \frac{N_k}{N} \quad \dots(51)$$

(18-3) For example, the learning processing unit 606 repeatedly performs the processing indicated in (18-1) and (18-2) until a convergence condition is satisfied. Accordingly, the learning processing unit 606 may appropriately update parameter $\beta_k$ of utility function and the class probability. For this reason, the learning processing unit 606 may appropriately learn a choice model that refers to parameter $\beta_k$ of utility function. The learning processing unit 606 transmits parameter $\beta_k$ of utility function and the class probability to the recording unit 602.

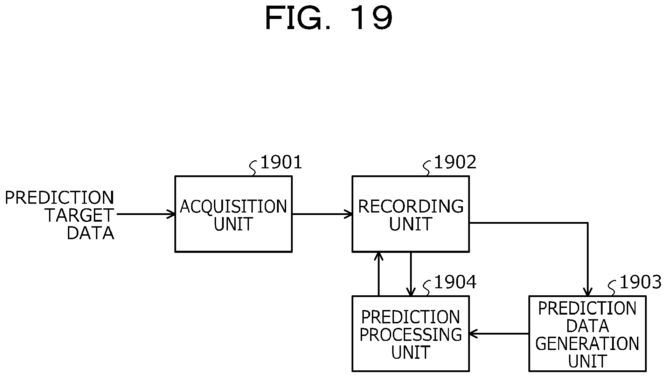

The recording unit 602 records parameter $\beta_k$ of utility function serving as a parameter of the choice model learned by the learning processing unit 606. For a certain choosing subject, the recording unit 602 records, as a posterior probability, the class probability learned by the learning processing unit 606 in association with the personal number identifying the certain choosing subject. Accordingly, the recording unit 602 may allow the choice model and posterior probability to be used. Next, description proceeds to the description of FIG. 19.

FIG. 19 illustrates a specific example of a functional configuration that realizes second prediction processing in which the information processing device 100 in the second operation example uses a choice model. In FIG. 19, the information processing device 100 includes an acquisition unit 1901, a recording unit 1902, a prediction data generation unit 1903, and a prediction processing unit 1904.

The acquisition unit 1901 acquires prediction target data including a prediction number for identifying one choosing action of a certain choosing subject and an option attribute of each option in a situation of the choosing action. For example, the choosing action may be a choosing action scheduled to be performed, and does not have to be performed yet. The prediction target data includes a personal number for identifying a choosing subject. The personal number in the prediction target data is the same as the personal number in the prediction target data. The prediction target data includes a personal attribute representing a characteristic of a choosing subject. The acquisition unit 1901 transmits the prediction target data to the recording unit 1902.

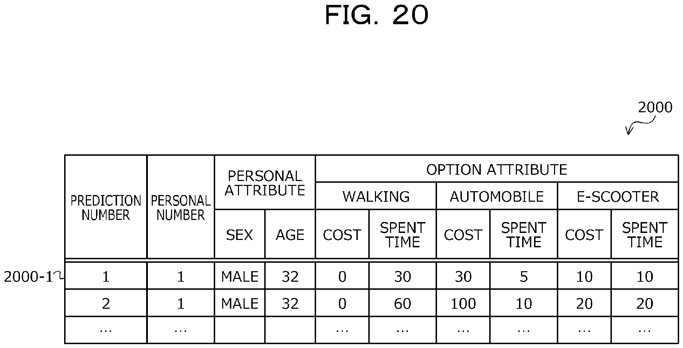

The recording unit 1902 receives the prediction target data from the acquisition unit 1901. The recording unit 1902 records the received prediction target data in a prediction target data management table 2000 to be described later with reference to FIG. 20. Description proceeds to the description of FIG. 20, and an example of the storage contents of the prediction target data management table 2000 will be described. For example, the prediction target data management table 2000 is realized by a storage area such as the memory 302 or the recording medium 305 of the information processing device 100 illustrated in FIG. 3.

FIG. 20 illustrates an example of the storage contents of the prediction target data management table 2000. As illustrated in FIG. 20, the prediction target data management table 2000 includes the fields of prediction number, personal number, personal attribute, and option attribute. In the prediction target data management table 2000, prediction target data is stored as record 2000-g by setting information in each field for each choosing action scheduled to be performed, g is an arbitrary integer.

A prediction number for identifying one choosing action of a certain choosing subject is set in the field of prediction number. A personal number for identifying the above certain choosing subject that has performed the above choosing action is set in the field of personal number. For example, the field of personal attribute includes the fields of sex and age. Sex of the above certain choosing subject that has performed the above choosing action is set in the field of sex. The age of the above certain choosing subject that has performed the above choosing action is set in the field of age.

An option attribute is set in the field of option attribute. For example, the option attribute is a temporal or financial cost or the like. For example, the field of option attribute includes the fields of walking, automobile, and e-scooter. For example, the field of walking includes the fields of cost and spent time. For example, an index value representing a financial cost generated in a case where a choosing subject chooses walking as movement means is set in the field of cost. For example, spent time representing a temporal cost generated in the case where a choosing subject chooses walking as movement means is set in the field of spent time.

For example, the field of automobile includes the fields of cost and spent time. For example, an index value representing a financial cost generated in a case where a choosing subject chooses automobile as movement means is set in the field of cost. For example, spent time representing a temporal cost generated in the case where a choosing subject chooses automobile as movement means is set in the field of spent time.

For example, the field of e-scooter includes the fields of cost and spent time. For example, an index value representing a financial cost generated in a case where a choosing subject chooses e-scooter as movement means is set in the field of cost. For example, spent time representing a temporal cost generated in the case where a choosing subject chooses e-scooter as movement means is set in the field of spent time.

Returning to the description of FIG. 19, the prediction data generation unit 1903 refers to the prediction target data management table 2000, and generates prediction data to be referred to by the prediction processing unit 1904 based on prediction target data. The prediction data generation unit 1903 generates prediction data in which a character string representing movement means is replaced with a number corresponding to the movement means and a character string representing sex of a choosing subject is replaced with a number corresponding to the sex in the received choice history data.

The prediction data generation unit 1903 assigns a class probability to the prediction data. In a case where a personal number is included in the prediction data, the prediction data generation unit 1903 uses the recording unit 1902 and assigns, as the class probability, a posterior probability corresponding to the personal number to the prediction data.

In a case where it is determined that there is no posterior probability corresponding to the personal number by using the recording unit 1902, the prediction data generation unit 1903 assigns a class probability to the prediction data in accordance with Bayes' theorem. For example, the prediction data generation unit 1903 calculates a posterior probability based on a prior probability and a distribution of personal attributes in accordance with Bayes' theorem, and assigns the posterior probability to the prediction data as a class probability. There may be a case in which the prediction data generation unit 1903 normalizes the value of prediction data.

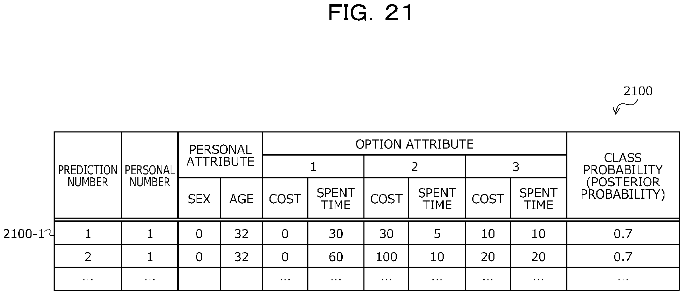

The prediction data generation unit 1903 records the generated prediction data in a prediction data management table 2100 to be described later with reference to FIG. 21. Description proceeds to the description of FIG. 21, and an example of the storage contents of the prediction data management table 2100 will be described. For example, the prediction data management table 2100 is realized by a storage area such as the memory 302 or the recording medium 305 of the information processing device 100 illustrated in FIG. 3.

FIG. 21 illustrates an example of the storage contents of the prediction data management table 2100. As illustrated in FIG. 21, the prediction data management table 2100 includes the fields of prediction number, personal number, personal attribute, option attribute, and class probability. In the prediction data management table 2100, prediction data is stored as record 1200-h by setting information in each field for each choosing action. h is an arbitrary integer.

A prediction number for identifying one choosing action of a certain choosing subject is set in the field of prediction number. A personal number for identifying the above certain choosing subject that has performed the above choosing action is set in the field of personal number. For example, the field of personal attribute includes the fields of sex and age. A number indicating sex of the above certain choosing subject that has performed the above choosing action is set in the field of sex. The age of the above certain choosing subject that has performed the above choosing action is set in the field of age.

An option attribute is set in the field of option attribute. For example, the option attribute is a temporal or financial cost or the like. For example, the field of option attribute includes the fields of number 1 indicating walking, number 2 indicating automobile, and number 3 indicating e-scooter. For example, the field of 1 includes the fields of cost and spent time. For example, an index value representing a financial cost generated in a case where a choosing subject chooses walking as movement means is set in the field of cost. For example, spent time representing a temporal cost generated in the case where a choosing subject chooses walking as movement means is set in the field of spent time.

For example, the field of 2 includes the fields of cost and spent time. For example, an index value representing a financial cost generated in a case where a choosing subject chooses automobile as movement means is set in the field of cost. For example, spent time representing a temporal cost generated in the case where a choosing subject chooses automobile as movement means is set in the field of spent time.

For example, the field of 3 includes the fields of cost and spent time. For example, an index value representing a financial cost generated in a case where a choosing subject chooses e-scooter as movement means is set in the field of cost. For example, spent time representing a temporal cost generated in the case where a choosing subject chooses e-scooter as movement means is set in the field of spent time. A class probability is set in the field of class probability.

Returning to the description of FIG. 19, the prediction processing unit 1904 acquires a parameter of a choice model from the recording unit 1902. The prediction processing unit 1904 refers to the prediction data management table 2100, and calculates a choosing probability that each option is chosen for each piece of prediction data.

For example, for prediction data, using the class 1 specific choice model, the prediction processing unit 1904 calculates a first choosing probability that each option is chosen. For example, for prediction data, using the class 2 specific choice model, the prediction processing unit 1904 calculates a second choosing probability that each option is chosen. For example, for each option, the prediction processing unit 1904 calculates, as a choosing probability, a sum of a value obtained by multiplying the calculated first choosing probability by a class probability as a weight and a value obtained by multiplying the calculated second choosing probability by (1 - class probability) as a weight. Accordingly, the prediction processing unit 1904 may accurately calculate a choosing probability that each option is chosen.

For example, the prediction processing unit 1904 transmits the calculated choosing probability to the recording unit 1902. The recording unit 1902 records the received choosing probability that each option is chosen, in association with the prediction data. Accordingly, the recording unit 1902 may allow the choosing probability that each option is chosen to be used.

Since a specific example of a functional configuration that realizes the second learning processing in which the information processing device 100 in the second operation example learns a choice model, and realizes the second prediction processing in which a choice model is used, is similar to the specific example of functional configuration illustrated in FIG. 13, description thereof will be omitted.

As described above, the information processing device 100 may learn a choice model capable of accurately estimating a choosing probability that each option is chosen, in consideration of the recognition of specific option J by a choosing subject. The information processing device 100 may allow a simulation using a choice model to be performed.

For example, the simulation is related to flow of people, purchase, or the like.

(Application Example of Information Processing Device 100)

The information processing device 100 may be applied to the field of traffic simulation. For example, the information processing device 100 may perform a simulation of simulating which movement means is chosen by a moving person serving as a choosing subject. For example, the information processing device 100 may analyze, by the simulation, how movement means chosen by a moving person changes due to a change in an environment such as a traffic jam condition, a road charge, and the cost of movement means. Accordingly, for example, the information processing device 100 may obtain information contributing to consideration of a city policy. For example, the information processing device 100 may be applied to the field of economy. For example, the information processing device 100 may perform a simulation of simulating which product is chosen by a customer serving as a choosing subject.

(Second Learning Processing Procedure)

Since an example of a second learning processing procedure executed by the information processing device 100 in the second operation example is, for example, similar to the example of the first learning processing procedure executed by the information processing device 100 in the first operation example illustrated in FIG. 14, description thereof will be omitted.

(Second Prediction Processing Procedure)

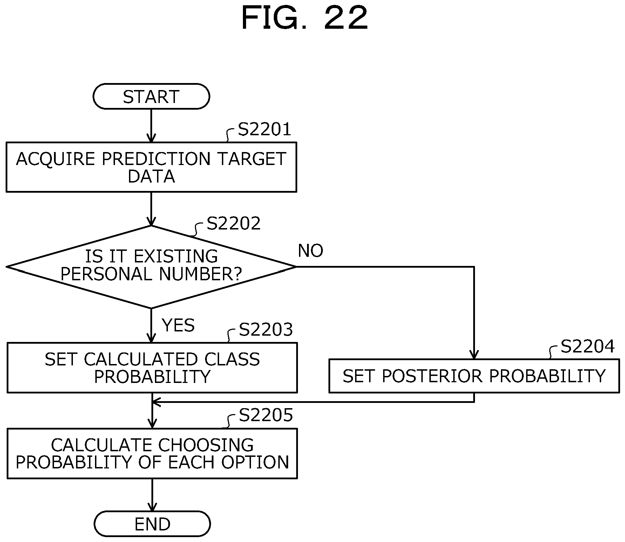

Next, with reference to FIG. 22, an example of a second prediction processing procedure executed by the information processing device 100 in the second operation example will be described. For example, the second prediction processing is realized by the CPU 301, a storage area such as the memory 302 or the recording medium 305, and the network I/F 303 illustrated in FIG. 3.
FIG. 22 is a flowchart illustrating an example of the second prediction processing procedure. In FIG. 22, the information processing device 100 acquires prediction target data (step S2201).
The information processing device 100 determines whether the personal number included in the acquired prediction target data is an existing personal number for which a class probability has been calculated (step S2202). When the personal number is an existing personal number (step S2202: Yes), the information processing device 100 proceeds to the processing of step S2203. On the other hand, when the personal number is not an existing personal number (step S2202: No), the information processing device 100 proceeds to the processing of step S2204.
In step S2203, the information processing device 100 sets the calculated class probability as the class probability corresponding to the target (step S2203). The information processing device 100 proceeds to the processing in step S2205.
In step S2204, the information processing device 100 calculates a posterior probability based on a prior probability and an attribute value, and sets the posterior probability as the class probability corresponding to the target (step S2204). The information processing device 100 proceeds to the processing in step S2205.
In step S2205, the information processing device 100 calculates a choosing probability of each option based on the set class probability (step S2205). The information processing device 100 ends the second prediction processing.
As described above, according to the information processing device 100, it is possible to acquire a plurality of records each representing an option chosen in the past among a plurality of options. According to the information processing device 100, it is possible to specify, from the plurality of records, one or more records corresponding to choosing subjects that have recognized the first option. According to the information processing device 100, for each record of the specified one or more records, it is possible to set, as an expected value of a probability that a choosing subject belongs to a first class in which the first option has been recognized, a first value representing that the choosing subject definitely belongs to the first class. According to the information processing device 100, it is possible to store a reference value of a probability that a choosing subject belongs to the first class, and a mathematical formula representing the effect of each option of a plurality of options. According to the information processing device 100, for each record of the remaining records different from the specified one or more records, it is possible to set, as an expected value of a probability that a choosing subject belongs to the first class, a second value representing that the choosing subject probabilistically belongs to the first class based on the reference value and mathematical formula. According to the information processing device 100, it is possible to learn the reference value and a parameter included in the mathematical formula based on each record of the acquired plurality of records and the expected values. Accordingly, the information processing device 100 may accurately learn the reference value and the parameter included in the mathematical formula. For this reason, the information processing device 100 may make it easy to learn a model for accurately estimating an option chosen by a choosing subject by using the mathematical formula.

According to the information processing device 100, by learning the reference value and the parameter of mathematical formula, it is possible to learn a model for estimating a probability that each option of a plurality of options is chosen by using the mathematical formula in response to input of the feature amount related to each option. Accordingly, the information processing device 100 may learn a model for accurately estimating an option chosen by a choosing subject.

According to the information processing device 100, it is possible to learn a first model for a case in which a choosing subject belongs to the first class by learning the reference value and the parameter of mathematical formula. According to the information processing device 100, it is possible to learn a second model for a case in which a choosing subject does not belong to the first class. Accordingly, the information processing device 100 may learn different models depending on whether a choosing subject belongs to the first class. The information processing device 100 may allow accurate estimation of an option chosen by a choosing subject by difFerently using the models.

According to the information processing device 100, for each record of one or more records representing the first option, it is possible to set, as an expected value, the first value representing that a choosing subject definitely belongs to the first class. Accordingly, the information processing device 100 may set, for a record determined to correspond to a choosing subject that has recognized the first option, the first value representing that the choosing subject definitely belongs to the first class. For this reason, the information processing device 100 may make it easy to reflect, in the model, which option is chosen by a choosing subject that has recognized the first option.

According to the information processing device 100, for each record of one or more records including the same or a similar attribute value as or to that of a record representing the first option, it is possible to set, as an expected value, the first value representing that a choosing subject definitely belongs to the first class. Accordingly, the information processing device 100 may set, for a record corresponding to a choosing subject for which there is a relatively high possibility of having recognized the first option, the first value representing that a choosing subject definitely belongs to the first class. For this reason, the information processing device 100 may make it easy to reflect, in the model, which option is chosen by a choosing subject that has recognized the first option.

According to the information processing device 100, it is possible to store a mathematical formula representing the effect of each option of a plurality of options in a case where a choosing subject belongs to the first class. According to the information processing device 100, it is possible to store a mathematical formula representing the effect of each option of the remaining options different from the first option among a plurality of options in a case where a choosing subject does not belong to the first class. Accordingly, the information processing device 100 may allow mathematical formulae to be used that take into consideration whether a choosing subject has recognized the first option.

According to the information processing device 100, it is possible to store a similarity between each record of the remaining records and a record representing the first option. According to the information processing device 100, for each record of the remaining records, it is possible to set, as an expected value, the second value representing that a choosing subject probabilistically belongs to the first class such that the expected value increases as the similarity to the record representing the first option increases. Accordingly, the information processing device 100 may adjust an expected value based on a similarity, and may make it easy to learn a model for accurately estimating an option chosen by a choosing subject.

According to the information processing device 100, it is possible to treat a plurality of options each representing movement means as processing targets. Accordingly, the information processing device 100 may make it easy to accurately estimate which movement means is chosen by a choosing subject.

The information processing method described in the present embodiment may be realized by causing a computer, such as a PC or a workstation, to execute a program prepared in advance. The information processing program described in the present embodiment is recorded in a computer-readable recording medium, and is executed by being read from the recording medium by a computer. The recording medium is a hard disk, a flexible disk, a compact disc (CD)-ROM, a magneto optical (MO) disc, a Digital Versatile Disc (DVD), or the like. The information processing program described in the present embodiment may be distributed via a network such as the Internet.

The following appendices are further disclosed in relation to the above embodiment.

**Claims**

1. An information processing method **characterized in that** a computer executes a process comprising:

    acquiring a plurality of records that each represents an option chosen in a past among a plurality of options;
    for each record of one or more records that correspond to a choosing subject that has recognized a first option among the acquired plurality of records, setting a first value that represents that a choosing subject definitely belongs to a first class in which the first option has been recognized, as an expected value of a probability that a choosing subject belongs to the first class;
    for each record of remaining records different from the one or more records among the acquired plurality of records, setting, as the expected value, a second value that represents that a choosing subject probabilistically belongs to the first class based on a reference value of a probability that a choosing subject belongs to the first class and a mathematical formula that represents an effect of each option of the plurality of options; and learning the reference value and a parameter included in the mathematical formula based on each record of the acquired plurality of records and the expected value set for each record of the acquired plurality of records.

2. The information processing method according to claim 1, wherein

in the learning,
a model for estimating a probability that each option of the plurality of options is chosen by using the mathematical formula in response to input of a feature amount related to each option of the plurality of options, is learned by learning the reference value and a parameter of the mathematical formula.

3. The information processing method according to claim 2, wherein

in the learning,
a first model for estimating a probability that each option of the plurality of options is chosen by using the mathematical formula in response to input of a feature amount related to each option of the plurality of options in a case where a choosing subject belongs to the first class, and a second model for estimating a probability that each option of remaining options different from the first option is chosen by using the mathematical formula in response to input of a feature amount related to each option of the remaining options among the plurality of options in a case where a choosing subject does not belong to the first class, are learned by learning the reference value and a parameter of the mathematical formula.

4. The information processing method according to claim 1 or 2, wherein

in the setting of a first value,
for each record of one or more records that represent the first option, a first value that represents that a choosing subject definitely belongs to the first class is set as the expected value.

5. The information processing method according to claim 1 or 2, wherein

each of the plurality of records includes an attribute value of a choosing subject, and
in the setting of a first value,
for each record of one or more records that include a same or similar attribute value as or to that of a record that represents the first option, a first value that represents that a choosing subject definitely belongs to the first class is set as the expected value.

6. The information processing method according to claim 1 or 2, wherein

in the setting of a second value,
for each record of the remaining records, a second value that represents that a choosing subject probabilistically belongs to the first class is set as the expected value based on the reference value, a mathematical formula that represents an effect of each option of the plurality of options in a case where a choosing subject belongs to the first class, and a mathematical formula that represents an effect of each option of remaining options different from the first option among the plurality of options in a case where a choosing subject does not belong to the first class.

7. The information processing method according to claim 1 or 2, wherein

in the setting of a second value,
for each record of the remaining records, based on the reference value, a mathematical formula that represents an effect of each option of the plurality of options, and a similarity between each record of the remaining records and a record that represents the first option, a second value that represents that a choosing subject probabilistically belongs to the first class is set as the expected value such that the expected value increases as a similarity to a record that represents the first option increases.

8. The information processing method according to any one of claims 1 to 7, wherein each of the plurality of options is an option that represents movement means.

9. An information processing program causing a computer to execute a process of:

acquiring a plurality of records that each represents an option chosen in a past among a plurality of options;
for each record of one or more records that correspond to a choosing subject that has recognized a first option among the acquired plurality of records, setting a first value that represents that a choosing subject definitely belongs to a first class in which the first option has been recognized, as an expected value of a probability that a choosing subject belongs to the first class;
for each record of remaining records different from the one or more records among the acquired plurality of records, setting, as the expected value, a second value that represents that a choosing subject probabilistically belongs to the first class based on a reference value of a probability that a choosing subject belongs to the first class and a mathematical formula that represents an effect of each option of the plurality of options; and
learning the reference value and a parameter included in the mathematical formula based on each record of the acquired plurality of records and the expected value set for each record of the acquired plurality of records.

FIG. 1

# FIG. 2

# FIG. 3

FIG. 4

400

STORAGE
UNIT

100

401

ACQUISITION
UNIT

402

FIRST
SETTING
UNIT

403

SECOND
SETTING
UNIT

404

LEARNING
UNIT

405

PREDICTION
UNIT

406

OUTPUT
UNIT

# FIG. 5

501

```
CLASS THAT
RECOGNIZES OPTION J
```

CHOOSING
SUBJECT THAT HAS
CHOSEN OPTION J
BEFORE

DEFINITELY BELONG

```
CHOICE MODEL IN WHICH
OPTION J IS INCLUDED IN
OPTION SET
```

511

PROBABILISTICALLY BELONG
(EFFECT OF OPTION J IS SMALL)

502

```
CLASS THAT DOES NOT
RECOGNIZE OPTION J
```

CHOOSING
SUBJECT THAT
HAS NOT CHOSEN
OPTION J BEFORE

PROBABILISTICALLY BELONG
(EFFECT OF OPTION J IS
LARGE)

```
CHOICE MODEL IN WHICH
OPTION J IS NOT
INCLUDED IN OPTION SET
```

512

# FIG. 6

CHOICE
HISTORY
DATA → ACQUISITION UNIT ⟨601 → RECORDING UNIT ⟨602

INITIAL
VALUE → MODEL SETTING UNIT ⟨603 → LEARNING PROCESSING UNIT ⟨606 ← LEARNING DATA GENERATION UNIT ⟨605

CONVERGENCE
CONDITION

RECOGNITION FLAG ASSIGNING UNIT ⟨604

# FIG. 7

700

| OBSERVATION NUMBER | PERSONAL NUMBER | OPTION ATTRIBUTE | | | | | | CHOICE |
|---|---|---|---|---|---|---|---|---|
| | | WALKING | | AUTOMOBILE | | E-SCOOTER | | |
| | | COST | SPENT TIME | COST | SPENT TIME | COST | SPENT TIME | |
| 1 | 1 | 0 | 30 | 30 | 5 | 10 | 10 | WALKING |
| 2 | 1 | 0 | 60 | 100 | 10 | 20 | 20 | E-SCOOTER |
| ... | ... | ... | ... | ... | ... | ... | ... | ... |

700-1

# FIG. 8

# FIG. 9

900

| OBSERVATION NUMBER | PERSONAL NUMBER | OPTION ATTRIBUTE | | | | | | CHOICE | RECOGNITION FLAG |
|---|---|---|---|---|---|---|---|---|---|
| | | 1 | | 2 | | 3 | | | |
| | | COST | SPENT TIME | COST | SPENT TIME | COST | SPENT TIME | | |
| 1 | 1 | 0 | 30 | 30 | 5 | 10 | 10 | 1 | 1 |
| 2 | 1 | 0 | 60 | 100 | 10 | 20 | 20 | 3 | 1 |
| ... | ... | ... | ... | ... | ... | ... | ... | ... | ... |

900-1

# FIG. 10

PREDICTION TARGET DATA → ACQUISITION UNIT ⟨1001⟩ → RECORDING UNIT ⟨1002⟩

RECORDING UNIT ⟨1002⟩ → PREDICTION PROCESSING UNIT ⟨1003⟩

PREDICTION PROCESSING UNIT ⟨1003⟩ → PREDICTION DATA GENERATION UNIT ⟨1004⟩

PREDICTION DATA GENERATION UNIT ⟨1004⟩ ↔ RECORDING UNIT ⟨1002⟩

# FIG. 11

1100

| PREDICTION NUMBER | PERSONAL NUMBER | OPTION ATTRIBUTE | | | | | |
|---|---|---|---|---|---|---|---|
| | | WALKING | | AUTOMOBILE | | E-SCOOTER | |
| | | COST | SPENT TIME | COST | SPENT TIME | COST | SPENT TIME |
| 1 | 1 | 0 | 30 | 30 | 5 | 10 | 10 |
| 2 | 1 | 0 | 60 | 100 | 10 | 20 | 20 |
| ... | ... | ... | ... | ... | ... | ... | ... |

1100-1

# FIG. 12

1200

| PREDICTION NUMBER | PERSONAL NUMBER | OPTION ATTRIBUTE | | | | | | CLASS PROBABILITY (POSTERIOR PROBABILITY) |
|---|---|---|---|---|---|---|---|---|
| | | 1 | | 2 | | 3 | | |
| | | COST | SPENT TIME | COST | SPENT TIME | COST | SPENT TIME | |
| 1 | 1 | 0 | 30 | 30 | 5 | 10 | 10 | 0.7 |
| 2 | 1 | 0 | 60 | 100 | 10 | 20 | 20 | 0.7 |
| ... | ... | ... | ... | ... | ... | ... | ... | ... |

# FIG. 13

# FIG. 14

```
                    ┌─────────┐
                    │  START  │
                    └─────────┘
                         │
                         ▼                      ⌐S1401
        ┌────────────────────────────────────────┐
        │  ACQUIRE PLURALITY OF PIECES OF CHOICE   │
        │              HISTORY DATA                │
        └────────────────────────────────────────┘
                         │
                         ▼                      ⌐S1402
        ┌────────────────────────────────────────┐
        │    INITIALIZE PARAMETER OF CHOICE MODEL  │
        └────────────────────────────────────────┘
                         │
                         ▼                      ⌐S1403
        ┌────────────────────────────────────────┐
        │    CALCULATE EXPECTED VALUE OF CLASS     │
        │              PROBABILITY                 │
        └────────────────────────────────────────┘
                         │
                         ▼                      ⌐S1404
        ┌────────────────────────────────────────┐
        │     CORRECT EXPECTED VALUE OF CLASS      │
        │              PROBABILITY                 │
        └────────────────────────────────────────┘
                         │
                         ▼                      ⌐S1405
        ┌────────────────────────────────────────┐
        │    CALCULATE EXPECTED VALUE OF LOG       │
        │              LIKELIHOOD                  │
        └────────────────────────────────────────┘
                         │
                         ▼                      ⌐S1406
        ┌────────────────────────────────────────┐
        │    UPDATE PARAMETER OF CHOICE MODEL      │
        └────────────────────────────────────────┘
                         │
                         ▼                      ⌐S1407
                    ╱─────────────╲
          NO       ╱ IS CONVERGENCE ╲
        ◄─────────◄ CONDITION SATISFIED? ►
                   ╲               ╱
                    ╲─────────────╱
                         │
                         │ YES
                         ▼
                    ┌─────────┐
                    │   END   │
                    └─────────┘
```

# FIG. 15

START

ACQUIRE PREDICTION TARGET DATA ⌐S1501

IS IT EXISTING PERSONAL NUMBER? ⌐S1502

NO → SET PRIOR PROBABILITY ⌐S1504

YES

SET CALCULATED CLASS PROBABILITY ⌐S1503

CALCULATE CHOOSING PROBABILITY OF EACH OPTION ⌐S1505

END

FIG. 16

1600

| OBSERVATION NUMBER | PERSONAL NUMBER | PERSONAL ATTRIBUTE | | OPTION ATTRIBUTE | | | | | | CHOICE |
|---|---|---|---|---|---|---|---|---|---|---|
| | | | | WALKING | | AUTOMOBILE | | E-SCOOTER | | |
| | | SEX | AGE | COST | SPENT TIME | COST | SPENT TIME | COST | SPENT TIME | |
| 1 | 1 | MALE | 32 | 0 | 30 | 30 | 5 | 10 | 10 | WALKING |
| 2 | 1 | MALE | 32 | 0 | 60 | 100 | 10 | 20 | 20 | E-SCOOTER |
| ... | ... | | | ... | ... | ... | ... | ... | ... | ... |

1600-1

# FIG. 17

FIG. 18

1800

| OBSERVATION NUMBER | PERSONAL NUMBER | PERSONAL ATTRIBUTE | | OPTION ATTRIBUTE | | | | | | CHOICE | RECOGNITION FLAG |
|---|---|---|---|---|---|---|---|---|---|---|---|
| | | | | 1 | | 2 | | 3 | | | |
| | | SEX | AGE | COST | SPENT TIME | COST | SPENT TIME | COST | SPENT TIME | | |
| 1 | 1 | 0 | 32 | 0 | 30 | 30 | 5 | 10 | 10 | 1 | 1 |
| 2 | 1 | 0 | 32 | 0 | 60 | 100 | 10 | 20 | 20 | 3 | 1 |
| ... | ... | | | ... | ... | ... | ... | ... | ... | ... | ... |

1800-1

# FIG. 19

PREDICTION
TARGET
DATA →

1901
ACQUISITION
UNIT
→
1902
RECORDING
UNIT

1904
PREDICTION
PROCESSING
UNIT
←
1903
PREDICTION
DATA
GENERATION
UNIT

# FIG. 20

2000

| PREDICTION NUMBER | PERSONAL NUMBER | PERSONAL ATTRIBUTE | | OPTION ATTRIBUTE | | | | | |
|---|---|---|---|---|---|---|---|---|---|
| | | | | WALKING | | AUTOMOBILE | | E-SCOOTER | |
| | | SEX | AGE | COST | SPENT TIME | COST | SPENT TIME | COST | SPENT TIME |
| 1 | 1 | MALE | 32 | 0 | 30 | 30 | 5 | 10 | 10 |
| 2 | 1 | MALE | 32 | 0 | 60 | 100 | 10 | 20 | 20 |
| ... | ... | | | ... | ... | ... | ... | ... | ... |

2000-1

# FIG. 21

2100

| PREDICTION NUMBER | PERSONAL NUMBER | PERSONAL ATTRIBUTE | | OPTION ATTRIBUTE | | | | | | CLASS PROBABILITY (POSTERIOR PROBABILITY) |
| --- | --- | --- | --- | --- | --- | --- | --- | --- | --- | --- |
| | | | | 1 | | 2 | | 3 | | |
| | | SEX | AGE | COST | SPENT TIME | COST | SPENT TIME | COST | SPENT TIME | |
| 1 | 1 | 0 | 32 | 0 | 30 | 30 | 5 | 10 | 10 | 0.7 |
| 2 | 1 | 0 | 32 | 0 | 60 | 100 | 10 | 20 | 20 | 0.7 |
| ... | ... | | | ... | ... | ... | ... | ... | ... | ... |

2100-1

# FIG. 22

START

ACQUIRE PREDICTION TARGET DATA — S2201

IS IT EXISTING PERSONAL NUMBER? — S2202

NO → SET POSTERIOR PROBABILITY — S2204

YES → SET CALCULATED CLASS PROBABILITY — S2203

CALCULATE CHOOSING PROBABILITY OF EACH OPTION — S2205

END

Europäisches
Patentamt

European
Patent Office

Office européen
des brevets

# EUROPEAN SEARCH REPORT

**Application Number**

EP 24 17 3298

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 260 033 B1 (TATSUOKA CURTIS M [US]) 10 July 2001 (2001-07-10) * Eq.(3) * * column 10, line 57 * * column 33, line 31 * * column 8, line 24 * * column 24, line 5 * ----- | 1-9 | INV. G06N3/08 G06N20/00 G06Q10/04 |
| X | US 2019/311220 A1 (HAZARD CHRISTOPHER JAMES [US] ET AL) 10 October 2019 (2019-10-10) * paragraphs [0025] - [0030], [0183] * ----- | 1,9 | |
| X | JP 6 443858 B2 (IBM) 26 December 2018 (2018-12-26) * paragraphs [0028] - [0030] * ----- | 1,9 | |

|  | TECHNICAL FIELDS SEARCHED (IPC) |
|---|---|
|  | G06N G06Q |

The present search report has been drawn up for all claims

| Place of search | Date of completion of the search | Examiner |
|---|---|---|
| Munich | 4 October 2024 | Frank, Mario |

EPO FORM 1503 03.82 (P04C01)

## ANNEX TO THE EUROPEAN SEARCH REPORT
## ON EUROPEAN PATENT APPLICATION NO.

EP 24 17 3298

This annex lists the patent family members relating to the patent documents cited in the above-mentioned European search report.
The members are as contained in the European Patent Office EDP file on
The European Patent Office is in no way liable for these particulars which are merely given for the purpose of information.

04-10-2024

| Patent document cited in search report | | Publication date | Patent family member(s) | | Publication date |
|---|---|---|---|---|---|
| US 6260033 | B1 | 10-07-2001 | CA | 2212019 A1 | 13-03-1998 |
| | | | JP | H10153947 A | 09-06-1998 |
| | | | US | 5855011 A | 29-12-1998 |
| | | | US | 6260033 B1 | 10-07-2001 |
| | | | US | 6301571 B1 | 09-10-2001 |
| US 2019311220 | A1 | 10-10-2019 | EP | 3776386 A1 | 17-02-2021 |
| | | | US | 2019311220 A1 | 10-10-2019 |
| | | | WO | 2019199759 A1 | 17-10-2019 |
| JP 6443858 | B2 | 26-12-2018 | JP | 6443858 B2 | 26-12-2018 |
| | | | JP | 2016099764 A | 30-05-2016 |
| | | | US | 2016148120 A1 | 26-05-2016 |

EPO FORM P0459

For more details about this annex : see Official Journal of the European Patent Office, No. 12/82

**EP 4 471 669 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019114243 A